(19) Europäisches Patentamt
European Patent Office
Office européen des brevets

(11) Numéro de publication: **0 210 928 B1**

(12) # FASCICULE DE BREVET EUROPEEN

(45) Date de publication du fascicule du brevet: 14.03.90

(51) Int. Cl.⁴: C22B 3/00, C22B 60/02, C01F 17/00, C01G 56/00, C07C 233/17, C07C 233/03

(21) Numéro de dépôt: 86401669.6

(22) Date de dépôt: 25.07.86

(54) **Nouveaux agents d'extraction et nouveaux propanediamides, leur utilisation pour la récuperation des actinides et/ou des lanthanides et leur procédé de préparation.**

(30) Priorité: 31.07.85 FR 8511707
31.07.85 FR 8511706

(43) Date de publication de la demande: 04.02.87 Bulletin 87/6

(45) Mention de la délivrance du brevet: 14.03.90 Bulletin 90/11

(84) Etats contractants désignés: DE GB IT

(56) Documents cités:
EP-A- 0 110 789
FR-A- 900 605
US-A- 3 946 074

CHEMICAL ABSTRACTS, vol. 87, no. 11, 12 septembre 1977, page 546, revendication no. 84461h, Columbus, Ohio, US; M. HUYS-FRANCOTTE et al.: "New cyanine synthons from phosgeniminium salts and dicarboxamides or vinylogous acetamides", & J. CHEM. RES. S. (SYNOPSES) 1977, (4), 100-1 000

CHEMICAL ABSTRACTS, vol. 91, no. 20, 12 novembre 1979, page 398, revendication no. 163698b, Columbus, Ohio, US; C. POHLANDT et al.: "Extraction of metal ions from chloride solution with N,N-dioctylacetamide", & TALANTA 1979, 26(5), 395-9

CHEMICAL ABSTRACTS, vol. 94, 1981, page 419, revendication no. 21894a, Columbus, Ohio, US; G.M. GASPARINI et al.: "Application of N,N-dialkyl aliphatic amides in the separation of some actinides", & SEP. SCI. TECHNOL. 1980, 15(4), 825-44

CHEMICAL ABSTRACTS, vol. 72, 1970, page 385, revendication no. 36404k, Columbus, Ohio, US; V.S. SHMIDT et al.: "Extraction of various actinide elements from nitric acid solutions by N,N-dialkylacetamides", & RADIOKHIMIYA 1969, 11(5), 593-5

HYDROMETALLURGY, vol. 8, no. 4, juillet 1982, pages 379-388, Elsevier Scientific Publishing Company, Amsterdam, NL; ZHOU TAILI et al.: "The amide type extractant A101 and its application to the separation of niobium and tantalum, and molybdenum and rhenium"SES) 1977, (4), 100-1 000

(56) Documents cités: (suite)

CHEMICAL ABSTRACTS, vol. 94, 1981, page 422, revendication no. 145962r, Columbus, Ohio, US; V. JEDINAKOVA et al.: "The extraction of lanthanides and americium by benzyldialkyl amides and benzyltrialkylammonium nitrates from the nitrate solutions; structure and aggregation of their salts", & INT. SOLVENT EXTR. CONF., [PROC.] 1980, 1, PAPER 80-185, 8 pp.

CHEMICAL ABSTRACTS, vol. 94, 1981, page 421, revendication no. 21916j, Columbus, Ohio, US; G.M. GASPARINI et al.: "N,N-dialkyl substituted aliphatic amides as extractants for actinides and fission products: preparation and extractive properties of N,N-di-n-butyl-2-ethylhexanamide and N,N-di-n-hexyloctanamide", & COM. NAZ. ENERG. NUCL. [RAPP. TEC.] CNEN-RT/CHI (ITALY) 1980, CNEN-RT/CHI(80)6, 113 pp.

CHEMICAL ABSTRACTS, vol. 89, 1978, page 454, revendication no. 136514r, Columbus, Ohio, US; B.N. LASKORIN et al.: "Extraction of uranium and transuranium elements by carboxylic acid amides", & RADIOKHIMIYA 1978, 20(4), 511-18

CHEMICAL ABSTRACTS, vol. 83, 1975, page 553, revendication no. 172086n, Columbus, Ohio, US; J.S. FRITZ et al.: "Extraction of metal ions with N,N-disubstituted amides", & ANAL. CHEM. 1975, 47(12), 2043-5

(73) Titulaire: COMMISSARIAT A L'ENERGIE ATOMIQUE, 31/33, rue de la Fédération, F-75015 Paris(FR)
Titulaire: INSTITUT NATIONAL DE RECHERCHE CHIMIQUE APPLIQUEE, 18 Bis, Boulevard de la Bastille, F-75012 Paris(FR)

(72) Inventeur: Musikas, Claude, 5, Avenue Moissan, F-91440 Bures(FR)
Inventeur: Hoel, Pierre, 2, Résidence du Parc Rue Pasteur, F-91120 Palaiseau(FR)
Inventeur: Thiollet, Gérard, Chemin Vert, F-91590 Cerny(FR)
Inventeur: Lafosse, Louisette, 15, Allée des Lilas, F-91710 Vert Le Petit(FR)

(74) Mandataire: Mongrédien, André et al, c/o BREVATOME 25, rue de Ponthieu, F-75008 Paris(FR)

EP 0 210 928 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne l'extraction de métaux au moyen d'agents d'extraction constitués par des propanediamides et elle s'applique en particulier à la récupération des actinides et/ou des lanthanides présents à l'état trivalent dans une solution aqueuse acide, notamment dans une solution nitrique.

Dans les installations de retraitement de combustibles nucléaires irradiés, on obtient habituellement, au premier stade d'extraction de l'uranium et du plutonium, des solutions aqueuses de produits de fission contenant des quantités relativement importantes d'ions trivalents de la série des lanthanides et des actinides. Les effluents provenant de ces installations contiennent également ces mêmes ions.

Compte tenu de la période relativement longue des éléments actinides trivalents, il est d'un grand intérêt de séparer ceux-ci des solutions aqueuses nitriques afin d'éviter la manipulation de déchets ou d'effluents ayant une activité $\alpha$ élevée. Jusqu'à présent, cette séparation était réalisée par extraction par solvant en utilisant comme extractants des composés organo-phosphorés neutres ou acides tels que le phosphate de tributyle ou l'acide di-2-éthyl hexylphosphorique. Cependant, l'emploi de tels extractants s'est révélé peu intéressant, car leur rendement d'extraction vis-à-vis des ions trivalents est faible et leur utilisation industrielle pose de nombreux problèmes en raison de la nécessité d'utiliser des quantités importantes d'agents salifiants, ce qui augmente le volume des déchets et le coût de traitement.

On a également envisagé d'utiliser pour cette séparation d'autres composés organo-phosphorés neutres ou bidentés tels que des diphosphonates et des carbamoylphosphonates, ainsi que des amides, comme cela est décrit dans J. Inorg. Nucl. Chem. 25(1963), p. 883–892, J. Inorg. Nucl. Chem. 26(1964), p. 1991–2003, et Separation Science and Technology 15(4), p. 825–844 (1980).

D'autres amides tels que le N,N-dioctyl acétamide, les N,N-dialkyl amides, le di-n-heptyl acétamide, le dilauryl acétamide, des dérivés d'acétamide et des benzyldialkylamides ont également été utilisés pour extraire différents métaux à partir de solutions aqueuses, comme il est décrit dans Chemical Abstracts, vol. 91, nº 20, 12/11/1979, nº 163 698b. – Chemical Abstracts, vol. 94, 1981, nº 21 894a – Chemical Abstracts, vol. 72, 1970, nº 36 404k – Hydrometallurgy, vol. 8, nº 4, juillet 1982 – Chemical Abstracts, vol. 94, 1981, nº 145 962r – Chemical Abstracts, vol. 94, 1981, nº 21 916j.

Cependant, les résultats obtenus ne sont pas satisfaisants, notamment avec les diamides tels que le tétrabutyl malonamide, car les rendements d'extraction sont très faibles.

Néanmoins, on a effectué des recherches sur d'autres diamides et l'on a découvert que des diamides de formule:

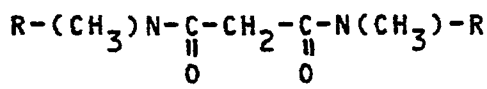

dans laquelle R est un radical alkyle ayant de 2 à 10 atomes de carbone permettaient d'obtenir des résultats satisfaisants comme cela est décrit dans le brevet français FR-A 2 537 326 déposé le 1.12.82 au nom du Commissariat à l'Energie Atomique.

Toutefois, de tels diamides présentent l'inconvénient d'être pour la plupart sous forme solide, ce qui pose des problèmes au niveau de leur mise en œuvre.

La présente invention a précisément pour objet de nouvelles compositions d'extraction de métaux comprenant au moins un propane diamide, utilisables en particulier pour la récupération des actinides et/ou des lanthanides par extraction dans un solvant organique, qui pallient l'inconvénient précité et permettent de plus l'obtention de coefficients d'extraction améliorés.

Ces nouvelles compositions d'extraction de métaux comprennent comme agent actif dans un diluant organique neutre, un propanediamide de formule:

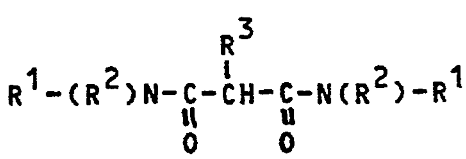
(I)

dans laquelle $R^1$ et $R^2$ qui peuvent être identiques ou différents, représentent un radical alkyle linéaire ou ramifié ayant de 1 à 15 atomes de carbone ou un radical de formule:

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, condition que Z soit une simple liaison lorsque n est égal à 0; et $R^3$ représente un atome d'hydrogène, un radical alkyle de 1 à 15 atomes de carbone, un radical de formule:

$$-(CH_2)_n-Z-(CH_2)_m-O-R^4$$

dans laquelle n, m, Z et $R^4$ ont la signification donnée ci-dessus, ou un radical de formule:

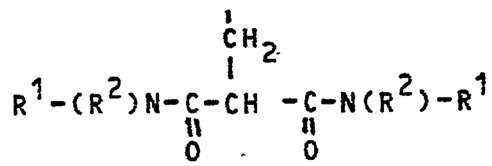

dans laquelle $R^1$ et $R^2$ ont la signification donnée ci-dessus, à condition que $R^3$ ne représente pas un atome d'hydrogène lorsque $R^1$ et $R^2$ représentent tous deux un radical alkyle.

Ces propanediamides peuvent être utilisés pour récupérer des métaux à partir de solutions aqueuses généralement acides. Ces métaux peuvent appartenir au groupe des métaux de transition comme le fer et le zirconium, au groupe des lanthanides ou au groupe des actinides.

Des propanediamides répondant à la formule (I) ci-dessus dans laquelle $R^1$ et $R^2$ représentent un radical alkyle et $R^3$ représente un atome d'hydrogène ou un radical alkyle ont été décrits respectivement dans Chemical Abstracts, vol. 87, nº 11, 84 461h, FR-A 900 605 et US-A 3 946 074, mais ils ne sont pas utilisés dans des compositions d'extraction de métaux.

L'utilisation pour l'extraction de métaux des propanediamides répondant à la formule donnée ci-dessus permet d'obtenir des coefficients d'extraction améliorés par rapport à ceux que l'on obtient avec les propanediamides de l'art antérieur, qui sont seulement tétrasubstitués par des radicaux alkyle.

De préférence, selon l'invention, le radical $R^1$ est le radical méthyle. De préférence encore, l'un des radicaux $R^2$ et $R^3$ est un radical répondant à la formule :

$$-(CH_2)_n-Z-(CH_2)_m-O-R^4$$

dans laquelle m, n, Z et $R^4$ ont la signification donnée ci-dessus.

En effet, la présence d'un substituant comprenant au moins une fonction éther-oxyde permet d'obtenir des coefficients d'extraction des actinides et des lanthanides encore meilleurs que ceux que l'on obtient avec les propanediamides pentasubstitués par des radicaux alkyle.

Selon un mode préféré de l'invention, le propanediamide répond à la formule (I), dans laquelle $R^1$ est le radical méthyle, $R^2$ est un radical alkyle et $R^3$ est le radical de formule :

$$-(CH_2)_n-Z-(CH_2)_m-O-R^4$$

dans laquelle n, m, Z et $R^4$ ont la signification donnée ci-dessus.

Dans ce mode préféré, les substituants susceptibles d'être utilisés peuvent comprendre une seule fonction éther-oxyde. Dans ce cas, n est égal à 0, Z est une simple liaison et, de préférence, m est égal à 1, 2 ou 3 et $R^4$ est un radical alkyle de 2 à 6 atomes de carbone.

Les substituants susceptibles d'être utilisés peuvent aussi comporter deux fonctions éther-oxyde. Dans ce cas, on peut utiliser en particulier les substituants dans lesquels n=2, Z représente un atome d'oxygène, m est égal à 2 et $R^4$ est un radical alkyle de 2 à 6 atomes de carbone.

L'invention a également pour objet les nouveaux propanediamides répondant à la formule:

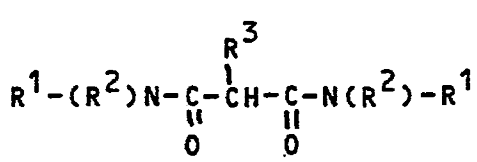 (I)

dans laquelle $R^1$ et $R^2$ qui peuvent être identiques ou différents, représentent un radical alkyle linéaire ou ramifié ayant de 1 à 15 atomes de carbone ou un radical de formule:

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0; et $R^3$ représente un atome d'hydrogène, un radical alkyle de 1 à 15 atomes de carbone, ou un radical de formule:

$$-(CH_2)_n-Z-(CH_2)_m-O-R^4$$

dans laquelle n, m, Z et $R^4$ ont la signification donnée ci-dessus, à condition que l'un au moins des radicaux $R^1$, $R^2$ et $R^3$ réponde à la formule:

$$-(CH_2)_n-Z-(CH_2)_mOR^4$$

dans laquelle n, m, Z et $R^4$ ont la signification donnée ci-dessus.

Lorsque $R^3$ représente un atome d'hydrogène, on obtient des propanediamides tétrasubstitués. A titre d'exemple de tels propanediamides, on peut citer le N,N'-diméthyl-N,N'-dioctoxyéthyl-propanediamide de formule :

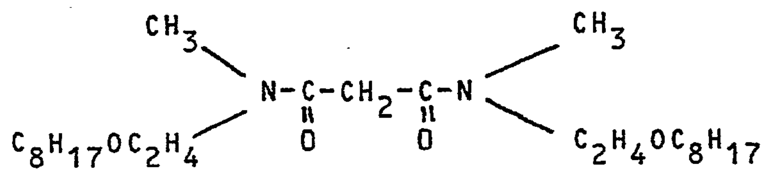

lorsque $R^3$ est différent d'un atome d'hydrogène, on obtient des propanediamides pentasubstitués. A titre d'exemple de tels propanediamides, on peut citer les propanediamides de formule (I) dans laquelle $R^1$ est le radical méthyle, $R^2$ est le radical butyl et $R^3$ est un radical choisi parmi les radicaux éthoxyéthyle, butoxyéthyle, hexoxyéthyle et hexoxyéthoxyéthyle, et le propanediamide de formule (I) dans laquelle $R^1$ est le radical méthyle, $R^2$ est le radical octyle et $R^3$ est le radical hexoxyéthyle.

Ces propanediamides sont particulièrement intéressants car la présence d'une fonction étheroxyde sur l'un des substituants permet d'obtenir des propriétés améliorées pour l'extraction des actinides et des lanthanides.

Selon l'invention, le propanediamide peut également être un propanediamide pentasubstitué par des radicaux alkyle. A titre d'exemple de tels composés, on peut citer les propanediamides répondant à la formule (I) dans laquelle $R^1$ est le radical méthyle, $R^2$ est le radical butyle et $R^3$ est le radical butyle ou le radical hexyle.

Les propanediamides de l'invention peuvent se présenter sous la forme d'un mélange d'isomères ou sous la forme d'isomères. Aussi, on précise que les formules, données ici représentent indifféremment le mélange d'isomères ou l'un des isomères.

Les propanediamides des compositions de l'invention peuvent être préparés par un procédé en quatre étapes à partir d'un malonate d'alkyle. Dans la première étape, on fixe sur le malonate d'alkyle le radical de formule $R^3$ par réaction du malonate d'alkyle avec un halogénure de formule $R^3X$ en présence de sodium, ce qui correspond au schéma réactionnel suivant:

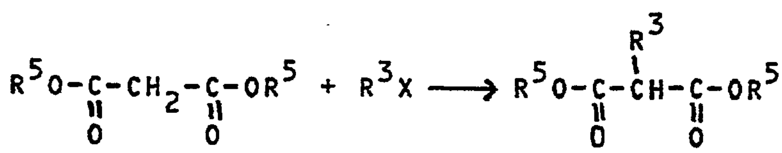

dans lequel $R^5$ représente un radical alkyle.

Dans une deuxième étape, on réalise une hydrolyse du malonate ramifié obtenu dans la première étape au moyen de soude ou de potasse, ce qui correspond au schéma réactionnel suivant:

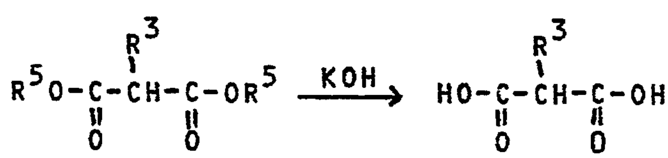


On transforme ensuite l'acide malonique substitué ainsi obtenu en chlorure de malonyle par réaction de celui-ci avec $SOCl_2$, ce qui correspond au schéma réactionnel suivant:

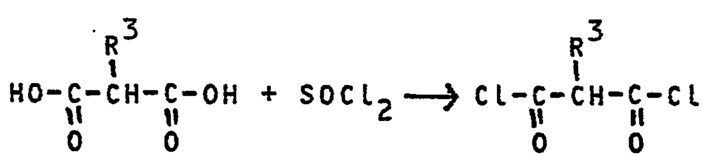

Après ces réactions, on procède enfin à une amination du chlorure de malonyle en faisant réagir celui-ci avec l'amine correspondante de formule

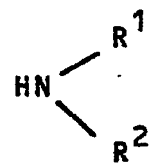

ce qui correspond au schéma suivant :

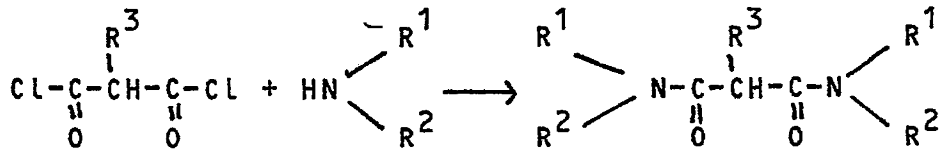

Les halogénures de formule $R^3X$ utilisés lorsque $R^3$ renferme un groupement éther-oxyde, peuvent être préparés par des procédés classiques, par exemple par le procédé décrit par F.C. Cooper et M.W. Partridge dans J. Chem. Soc. (1950) p 459.

Ce mode de préparation des propanediamides pentasubstitués présente toutefois l'inconvénient de nécessiter de nombreuses étapes.

Aussi, la présente invention propose un procédé de préparation de propanediamides pentasubstitués, qui permet d'éviter cet inconvénient.

Ce procédé de préparation d'un propanediamide pentasubstitué répondant à la formule :

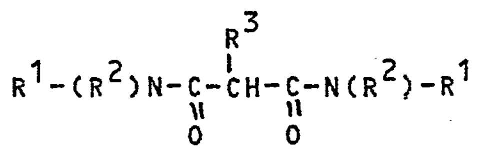
(I)

dans laquelle $R^1$, $R^2$ et $R^3$ ont les significations données ci-dessus, consiste à faire réagir un propanediamide tétrasubstitué de formule :

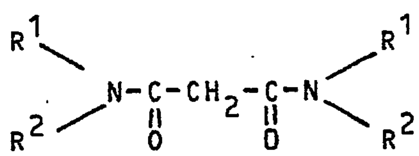
(III)

dans laquelle $R^1$ et $R^2$ ont la signification donnée ci-dessus avec un halogénure de formule $R^3X$ dans laquelle X représente un atome d'halogène, en présence d'agents métallants, par exemple le n-butyllithium ou le t-butyl-lithium.

Dans ce procédé, les halogénures de formule $R^3X$ sont de préférence des bromures ou des iodures et ils peuvent être préparés, lorsque $R^3$ renferme un groupement éther, en utilisant le procédé décrit par F.C.Cooper et M.W. Partridge dans J. Chem. Soc. (1950) p. 459.

Dans le procédé de l'invention, on fait tout d'abord une réaction de métallation du propanediamide tétrasubstitué, par exemple par le n ou le t-butyllithium selon le schéma réactionnel suivant :

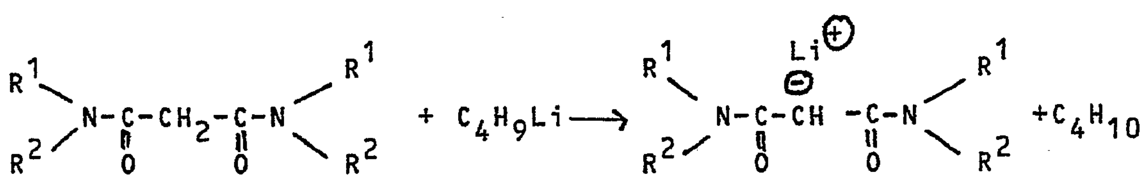

puis on condense l'halogénure de formule $R^3X$ sur le produit formé lors de la réaction de métallation, selon le schéma réactionnel suivant :

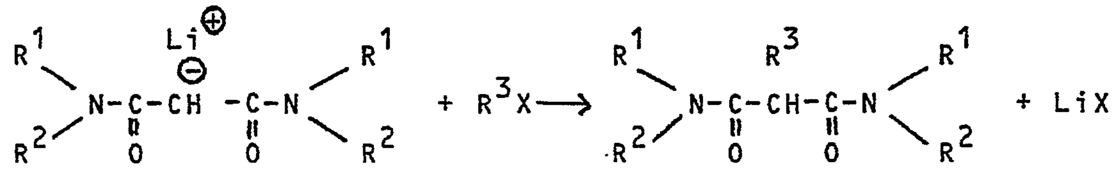

Les propanediamides tétrasubstitués utilisés comme produits de départ dans le procédé de l'invention peuvent être préparés par amination du chlorure de malonyle au moyen des amines correspondantes de formule

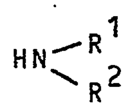

en utilisant la réaction décrite précédemment dans le cas des chlorures de malonyle substitués. Cette réaction est généralement effectuée en présence d'un catalyseur tel que la triéthylamine. Ce mode de préparation des propanediamides tétrasubstitués présente toutefois l'inconvénient de conduire à des rendements très faibles lorsque les chaînes hydrocarbonées $R^1$ et/ou $R^2$ de l'amine ont plus de 4 atomes de carbone.

Aussi, la présente invention propose également un autre procédé de préparation de propanediamides tétrasubstitués, qui permet d'obtenir de bons rendements même lorsque les radicaux $R^1$ et/ou $R^2$ de l'amine ont plus de 4 atomes de carbone.

Selon l'invention, on prépare ces propanediamides tétrasubstitués de formule :

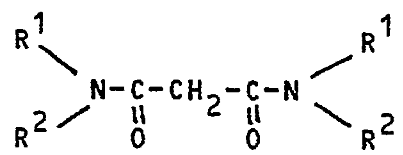
(III)

dans laquelle $R^1$ et $R^2$ ont la signification donnée ci-dessus, en faisant réagir un malonate d'alkyle de formule :

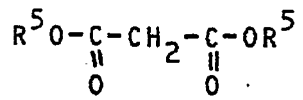

dans laquelle $R^5$ représente un radical alkyle, avec l'amine correspondante de formule

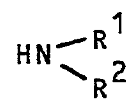

en présence d'un catalyseur.

Ceci correspond au schéma réactionnel suivant :

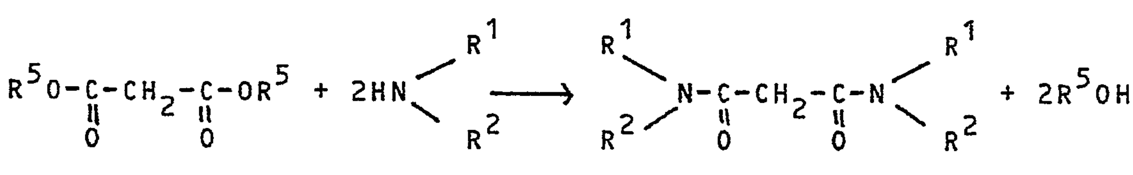

Généralement le malonate d'alkyle est du malonate d'éthyle, et l'on réalise la réaction en présence d'un catalyseur tel que l'hydroxypyridine, en opérant à une température supérieure à la température ambiante, par exemple à une température de 140 à 170°C.

Les amines de départ utilisées pour la préparation des propanediamides tétrasubstitués et des propanediamides pentasubstitués peuvent être préparées par des procédés classiques, en particulier par la méthode décrite par J.L. Nelson et R.C. Sentz dans J. Amer. Chem. Soc. vol.74, p 1704 (1952).

Le procédé, selon l'invention, de préparation des propanediamides pentasubstitués présente ainsi l'avantage de permettre l'obtention de tels produits en deux étapes à partir de produits commerciaux tels que le malonate d'éthyle et l'halogénure de formule $R^3X$. Par ailleurs, le procédé de l'invention est avantageux car il place l'étape critique de ramification, soit d'introduction du radical $R^3$, en dernier lieu, alors qu'elle est réalisée en premier lieu dans le procédé de synthèse à 4 étapes.

Lorsque le propane diamide de la composition d'extraction répond à la formule:

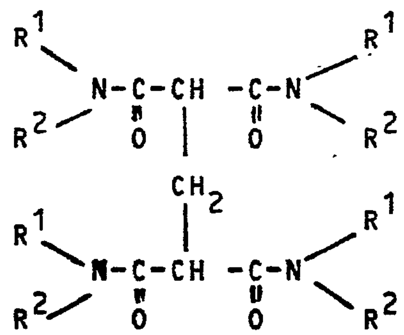

(II)

dans laquelle $R^1$ et $R^2$ qui peuvent être identiques ou différents, représentent un radical alkyle linéaire ou ramifié ayant de 1 à 15 atomes de carbone ou un radical de formule:

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n = 0, le procédé consiste à faire réagir un propanediamide tétrasubstitué de formule:

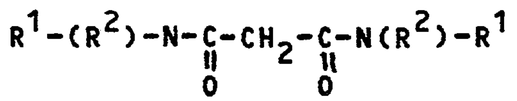

(III)

dans laquelle $R^1$ et $R^2$ ont la signification donnée ci-dessus avec un halogénure de méthoxyalkyle de formule $XCH_2OR$ dans laquelle X représente un atome d'halogène et R un radical alkyle de 1 à 8 atomes de carbone, par exemple un halogénure de méthoxyméthyle de formule $XCH_2-OCH_3$, en présence d'un agent métallant tel que le n-butyllithium ou le t-butyllithium.

Dans ces conditions, deux molécules du propanediamide tétrasubstitué réagissent avec un halogénure de méthoxyalkyle dans lequel l'alkyle contient de 1 à 8 atomes de carbone, par exemple un halogénure de méthoxyméthyle, généralement le bromure, pour former le propanediamide pentasubstitué répondant à la formule (II).

Lorsque l'on utilise les procédés décrits ci-dessus, le produit obtenu est constitué par un mélange d'isomères. Selon l'invention, on peut utiliser dans la composition d'extraction, l'un de ces isomères ou un mélange de ceux-ci, et l'on précise que les formules données dans le présent mémoire représentent indifféremment l'un des isomères ou le mélange d'isomères obtenu par les procédés décrits ci-dessus.

L'invention s'applique en particulier à la récupération des actinides et/ou des lanthanides présents à l'état trivalent dans une solution aqueuse acide.

Aussi, l'invention a également pour objet un procédé de récupération des actinides et/ou des lanthanides présents à l'état trivalent dans une solution aqueuse acide, qui consiste à mettre en contact ladite solution aqueuse avec une composition d'extraction comprenant au moins un propanediamide répondant à la formule (I), et un diluant organique inerte.

Selon l'invention, la concentration en propanediamide de la composition d'extraction est de préférence de 0,1 à 1,5 $mol.l^{-1}$.

En effet, le taux d'extraction augmente généralement avec la concentration en propanediamide de la composition. Toutefois, pour maintenir la viscosité et la densité de la composition dans une gamme appropriée, on utilise généralement des teneurs en propanediamide ne dépassant pas 1,5 $mol.l^{-1}$.

Les diluants susceptibles d'être utilisés sont des diluants organiques inertes ayant de préférence une constante diélectrique peu élevée.

A titre d'exemple de tels diluants, on peut citer le benzène, le xylène, le mésitylène, le tertiobutylbenzène, le dodécane et des mélanges de ceux-ci.

Généralement, on utilise comme diluant, un mélange de décanol et d'un composé choisi parmi le benzène, le xylène, le mésitylène, le tertiobutylbenzène et le dodécane, car la présence de décanol permet d'éviter que se forme une troisième phase pour des concentrations faibles en lanthanides ou en actinides extraits dans la phase organique. Cependant, pour ne pas diminuer trop fortement le rendement d'extraction, la composition d'extraction comprend généralement au plus 20% en volume de décanol.

Le procédé de l'invention peut être utilisé pour récupérer les actinides et les lanthanides à partir de différentes solutions aqueuses, mais notamment de solutions nitriques.

Le procédé de l'invention peut être mis en œuvre dans tout appareillage classique d'extraction tel que des batteries de mélangeurs-décanteurs, des colonnes pulsées, des extracteurs centrifuges, etc... Généralement, on opère à la pression et à la température ambiantes avec des rapports en volume : phase aqueuse/phase organique qui peuvent varier de 10/1 à 1/10.

Les actinides (III) et les lanthanides (III) extraits dans la composition d'extraction peuvent ensuite être récupérés avec de très bons rendements par réextraction dans de l'eau.

D'autres caractéristiques et avantages de l'invention apparaîtront mieux à la lecture des exemples suivants donnés bien entendu à titre illustratif et non limitatif en référence aux dessins annexés sur lesquels :

- les figures 1 et 2 sont des diagrammes représentant les variations des coefficients de distribution $D_{Am}$ de l'américium et $D_{Eu}$ de l'europium, en fonction de la concentration en acide nitrique de la solution aqueuse à traiter, lorsque l'on utilise comme extractant organique le 2-hexyl-N,N'-diméthyl-N,N'-dibutyl-propanediamide (figure 1) et le 2-éthoxyéthyl-N,N'-diméthyl-N,N'-dibutyl-propanediamide (figure 2), à des concentrations 0,5 mol.$l^{-1}$ dans un diluant t-butylbenzène 90% - décanol 10%,
- les figures 3 et 4 sont des diagrammes représentant les variations des coefficients de distribution $D_{Am}$ de l'américium et $D_{Eu}$ de l'europium en fonction de la concentration en diamide de la phase organique lorsque l'on utilise comme diamide le 2-hexyl-N,N'-diméthyl-N,N'-dibutyl-propanediamide (figure 3) et le 2-éthoxyéthyl-N,N'-diméthyl-N,N'-dibutyl-propanediamide (figure 4), et un diluant 90% t-butylbenzène - 10% décanol. La phase aqueuse était de l'acide nitrique 5N,
- la figure 5 est un diagramme représentant les variations des coefficients de distribution $D_{Am}$ et $D_{Eu}$ en fonction de la concentration en décanol du diluant de la phase organique,
- la figure 6 est un diagramme représentant les variations des coefficients de distribution $D_{Am}$ et $D_{Eu}$ en fonction de la concentration en acide nitrique de la solution aqueuse à traiter, lorsque l'on utilise comme extractant le N,N'-diméthyl-N,N'-diéthoxyoctyl propane diamide à une concentration de 0,5 mol.$l^{-1}$ dans le t-butylbenzène,
- la figure 7 est un diagramme représentant les variations des coefficients de distribution $D_{Am}$ et $D_{Eu}$ en fonction de la concentration en acide nitrique de la solution aqueuse à traiter, lorsqu'on utilise comme extractant (2-(3,6-OD)DBDMPDA, et
- la figure 8 est un diagramme représentant les variations des coefficients de distribution $D_U$, $D_{Pu}$, $D_{Zr}$, $D_{Fe}$ et $D_{Nb}$ en fonction de la concentration en acide nitrique de la solution aqueuse lorsque l'on utilise comme extractant le propanediamide de l'invention constitué par le composé n° 11.

Les exemples 1 et 2 illustrent la préparation de propanediamides tétrasubstitués ;

Les exemples 3 à 7 illustrent la préparation de propanediamides pentasubstitués par mise en oeuvre du procédé de l'invention et les nouveaux composés obtenus par ce procédé ; et

Les exemples 8 à 17 illustrent l'utilisation des propanediamides de l'invention pour l'extraction des actinides et des lanthanides.

EXEMPLE 1

Préparation du N,N'diméthyl-N,N'-dioctyl-propanediamide (composé n°1) de formule :

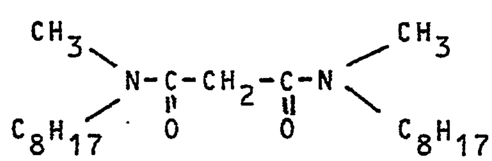

Dans un réacteur d'un litre, balayé par un courant d'azote, équipé d'une colonne de Vigreux, d'un réfrigérant et d'un ballon récepteur, on place 0,30 mol de malonate d'éthyle, 0,225 mol d'hydroxy-2-pyridine et 1,44 mol de méthyl-N-octyl-amine. On chauffe progressivement, il y a un départ d'alcool éthylique vers 175°C au bain d'huile. On continue à chauffer jusqu'à la fin du départ de l'alcool (185° au bain d'huile). On laisse refroidir, puis on reprend avec 300 ml de chloroforme, on lave à l'eau pour éliminer la pyridine, on décante, on sèche, puis on chasse le solvant et on distille. Après avoir distillé l'amine de départ (72-75°C/15 mm Hg) (2025 Pa) le produit recherché distille à 185-190°C/sous 0,1 mm Hg (13,5 Pa). On récupère 55 g d'un liquide jaune (rendement de 52%). Le produit cristallise dans l'hexane à +5°C (P.F. = 41°C), il a été caractérisé par la résonance magnétique nucléaire du proton et par potentiométrie.

EXEMPLE 2

On prépare de la même façon que dans l'exemple 1, les propanediamides tétrasubstitués (composés n° 2 à 5) du tableau 1, ci-dessous, en utilisant le malonate d'éhyle et les amines correspondantes de formule

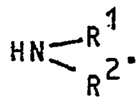

Les rendements obtenus et les points d'ébullition des propanediamides tétrasubstitués sont donnés également dans le tableau 1. Dans ce tableau, on a aussi reporté les résultats obtenus avec le propanediamide tétrasubstitué de l'exemple 1 (composé n°1).

TABLEAU 1

| Propanediamide de formule 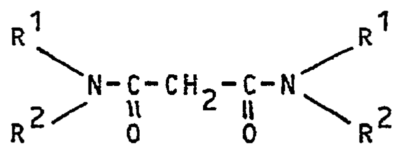 | | | | |
|---|---|---|---|---|
| Composé n° | $R^1$ | $R^2$ | Rdt | Eb. |
| 1 (DIAM 8) | $CH_3$ | $C_8H_{17}$ | 52% | 185-190°C/1mm (135 Pa) |
| 2 (DIAM 6) | $CH_3$ | $C_6H_{13}$ | 30% | 170-175°C/0,5mm (67,5 Pa) |
| 3 (DIAM 4,8) | $C_4H_9$ | $C_8H_{17}$ | 25% | - |
| 4 (DIAM 4,4) | $C_4H_9$ | $C_4H_9$ | 47% | 172-177°C/1mm (135 Pa) |
| 5 (DIAM 802) | $CH_3$ | $C_2H_4OC_8H_{17}$ | 50% | - |

EXEMPLE 3 : Préparation du 2-hexyl-N,N'-diméthyl-N,N'-dibutyl-propanediamide (2-HDBDMPDA) (composé n° 6)

a) - Préparation du N,N'-diméthyl-N,N'-dibutyl-propanediamide de formule :

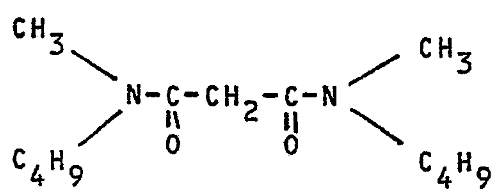

Dans un réacteur de 2 litres balayé par un courant d'azote, on introduit 2 mol de N-méthyl-N-butylamine dans 600 ml de chlorure de méthylène. On ajoute 2 mol de triéthylamine comme capteur d'acide chlorhydrique. On coule alors à 5°C une solution de chlorure de malonyle préparée à partir d'une mol de chlorure de malonyle dans 300 ml de chlorure de méthylène, et après l'addition de cette solution on porte 4 heures au reflux du chlorure de méthylène. Après refroidissement, on filtre, on lave abondamment à l'eau pour éliminer le chlorhydrate de triéthylamine, on sèche la phase organique, on chasse le solvant, puis on distille. On récupère ainsi 97 g d'un liquide qui distille à 140-144°C sous 0,3 mm de mercure (40,5 Pa), ce qui correspond à un rendement de 40%. Ce produit cristallise dans l'hexane à 5°C (point de fusion : 51,5°C).

On caractérise ce produit par résonance magnétique nucléaire du proton et par dosage potentiométrique et on vérifie ainsi qu'il correspond à la formule donnée ci-dessus.

b) - Préparation du 2-hexyl-N,N'-diméthyl-N,N'-dibutyl-propanediamide de formule :

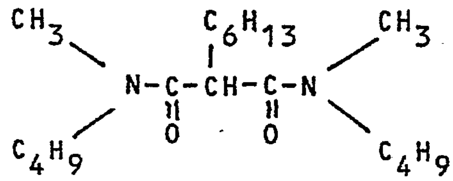

Dans un réacteur de 1 litre, balayé par un courant d'argon, on introduit 0,1 mol du N,N'-diméthyl-N,N'-dibutyl-propanediamide produit ci-dessus, dissous dans 400 ml de tétrahydrofurane. On refroidit à -50°C à l'aide d'un bain d'acétone et de carboglace et on coule une solution de n-butyl-lithium préparée à partir de 0,1 mol de n-butyl-lithium dans 100 ml de tétrahydrofurane anhydre. Dans les mêmes conditions, on coule une solution d'iodure d'hexyle préparée à partir de 0,1 mol d'iodure d'hexyle et de 100 ml de tétrahydrofurane anhydre. La coulée terminée, on laisse remonter la température à l'ambiante, puis on chauffe trois heures au reflux du tétrahydrofurane. On laisse refroidir, puis on hydrolyse avec un mélange eau-éthanol. On chasse le tétrahydrofurane et l'on forme ainsi un précipité. On reprend l'ensemble au chlorure de méthylène, on lave à l'eau, on sèche la couche organique, puis on chasse le solvant avant de distiller. Le point d'ébullition est de 145 à 148°C sous 0,4 mm de mercure, le produit est un liquide jaune. Sa caractérisation par résonance magnétique nucléaire du proton et par dosage potentiométrique confirme qu'il correspond à la formule donnée ci-dessus.

On a préparé de la même façon le 2,N,N'-triméthyl-N,N'-dibutylpropanediamide, le 2-éthyl-N,N'-diméthyl-N,N'-dibutylpropanediamide et le 2,N,N'-triméthyl-N,N'-dioctyle avec respectivement des rendements de 66%, 61,5% et 65,2% à partir du N,N'-diméthyl-N,N'-dibutylpropanediamide obtenu dans l'exemple 3a) ou du N,N'-diméthyl-N,N'-dioctylpropanediamide obtenu dans l'exemple 1 en utilisant comme halogénures, l'iodure de méthyle ou l'iodure d'éthyle.

EXEMPLE 4 : Préparation du 2-butyl-N,N'-diméthyl-N,N'-dibutyl propanediamide (composé n°7).

On prépare comme dans l'exemple 3a) du N,N'-diméthyl-N,N'-dibutyl propane diamide, puis on le fait réagir en suivant le mode opératoire de l'exemple 3b avec de l'iodure de butyle. On obtient ainsi le 2-butyl-N,N'-diméthyl-N,N'-dibutyl propane diamide avec un rendement de 47,6%.

EXEMPLE 5 : Préparation du 2-éthoxyéthyl-N,N'-diméthyl-N,N'-dibutyl-propanediamide (2-(3-OP)-DBDMPDA) (composé n°8) de formule :

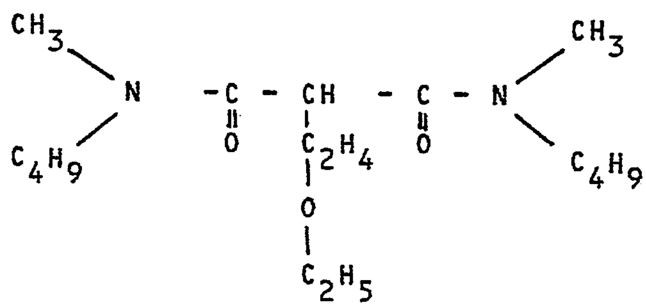

Dans un réacteur de 1 litre, balayé par un courant d'argon, on introduit 0,1 mol du N,N'-diméthyl-N,N'-dibutyl-propanediamide obtenu dans l'exemple 3a) dissous dans 400 ml de tétrahydrofurane anhydre. On refroidit à -50°C à l'aide d'un bain d'acétone et de carboglace et on coule une solution de n-butyl-lithium préparée à partir de 0,1 mol de n-butyl-lithium dans 100 ml de tétrahydrofurane anhydre. Dans les mêmes conditions, on coule une solution de bromure d'éthoxy-2-éthyle de formule $BrCH_2$-$CH_2$-O-$C_2H_5$ préparée à partir de 0,1 mol de bromure et de 100 ml de tétrahydrofurane anhydre. La coulée terminée, on laisse remonter la température à l'ambiante, puis on chauffe 3 heures au reflux de tétrahydrofurane. On laisse refroidir, puis on hydrolyse avec un mélange eau-éthanol. On chasse le tétrahydrofurane, il se forme un précipité. On reprend alors l'ensemble avec du chlorure de méthylène. On lave à l'eau, on sèche la couche organique, puis on chasse le solvant avant de chromatographier sur une colonne de gel de silice en utilisant comme éluant un mélange d'acétate d'éthyle et de cyclohexane (80/20 en volume). On récupère un liquide jaune constitué par le 2-éthoxyéthyl-N,N'-diméthyl-N,N'-dibutyl-propanediamide. On

caractérise le produit par spectrométrie de masse, résonance magnétique du proton et potentiométrie. Le rendement est de 40%.

EXEMPLE 6

On prépare de la même façon que dans l'exemple 5, les propanediamides pentasubstitués (composés n°9 à 12 du tableau 2) en faisant réagir le N,N'-diméthyl-N,N'-dibutyl-propanediamide obtenu dans l'exemple 3 avec les bromures correspondants dans le cas des composés 9 à 11, ou le N,N'-diméthyl-N,N'-dioctyl-propanediamide obtenu dans l'exemple 1 avec le bromure d'alkyle correspondant dans le cas du composé n°12.

Les rendements obtenus sont donnés également dans le tableau 2. Dans ce tableau, on a aussi reporté les résultats obtenus avec le propanediamide pentasubstitué de l'exemple 5 (composé n°8).

Dans le cas du composé N°11 du tableau 2, on a aussi utilisé un autre mode de purification que la chromatographie sur colonne de gel de silice. Ce traitement de purification a été effectué de la façon suivante : on agite 200 g du composé brut avec 2 l d'acide chlorhydrique 1N pendant 24 h, puis on laisse décanter ; on répète trois fois l'opération et on reprend la partie organique dans 200 ml de chlorure de méthylène, on lave à l'eau et on effectue une distillation flash.

On obtient ainsi un produit à 98% de pureté avec un rendement de 40%.

Ce mode de purification peut être utilisé également pour les autres composés du tableau 2.

TABLEAU 2

| Composé | $R^1$ | $R^2$ | $R^3$ | Rdt. |
|---|---|---|---|---|
| N°8 | $CH_3$ | $C_4H_9$ | $C_2H_4OC_2H_5$ | 40% |
| N°9 | $CH_3$ | $C_4H_9$ | $C_2H_4OC_4H_9$ | 52,7% |
| N°10 | $CH_3$ | $C_4H_9$ | $C_2H_4OC_6H_{13}$ | 55,6% |
| N°11 | $CH_3$ | $C_4H_9$ | $C_2H_4OC_2H_4OC_6H_{13}$ | 40,5% |
| N°12 | $CH_3$ | $C_8H_{17}$ | $C_2H_4OC_6H_{13}$ | 51% |
| N°14 | $CH_3$ | $C_4H_9$ | $C_2H_4OC_2H_4OC_8H_{17}$ | 60% |
| N°15 | $CH_3$ | $C_4H_9$ | $C_2H_4OC_2H_4OCH_2-CH(C_2H_5)-C_4H_9$ | 55% |

EXEMPLE 7

Préparation du bis [N,N'-diméthyl-N,N'-dibutyl-propanediamide] 2,2 méthylène (composé N°13) de formule :

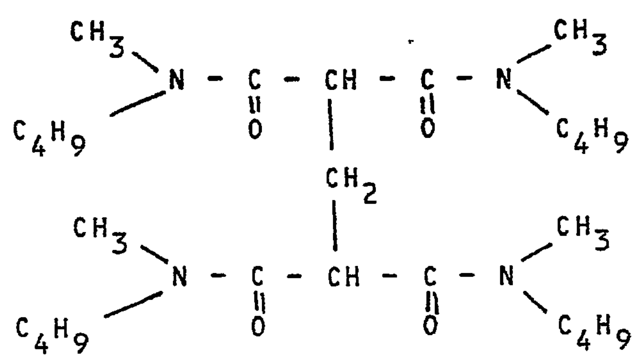

Dans un réacteur de 1 litre, balayé par un courant d'argon, on introduit 0,1 mol de N,N'-diméthyl-N,N'-dibutyl-propanediamide obtenu dans l'exemple 3a) dissous dans 400 ml de tétrahydrofurane (THF) anhydre. On refroidit à -50°C à l'aide d'un bain (acétone-carboglace) et on coule une solution de n-butyl-lithium préparée à partir de 0,1 mol de n-butyl-lithium dans 100 ml de THF anhydre. Dans les mêmes conditions, on coule une solution de bromo-méthoxy-méthane préparée à partir de 0,1 mol de bromure dans 100 ml de THF anhydre. La coulée terminée, on laisse remonter la température à l'ambiante puis on porte au reflux du THF pendant 3 heures. On laisse refroidir puis on hydrolyse avec un mélange (eau-éthanol). On chasse le THF puis on reprend le résidu avec du chlorure de méthylène. On lave à l'eau, on sèche la couche organique puis on chasse le solvant avant de chromatographier sur gel de silice en utilisant comme éluant un mélange d'acétate d'éthyle et de cyclohexane (80/20 en volume). On récupère 15,8g d'un produit jaune très visqueux (Rdt=63,4%).

Ce produit a été caractérisé par spectrométrie de masse, résonance magnétique nucléaire du proton et potentiométrie.

EXEMPLE 8

Cet exemple illustre la récupération de l'américium et de l'europium présents respectivement à des concentrations de $10^{-4}$ mol.$l^{-1}$ pour Am (III) et de $10^{-2}$ mol.$l^{-1}$ pour Eu (III) dans des solutions aqueuses nitriques d'acidités différentes.

On utilise dans tous les cas une phase organique constituée par le propanediamide constitué par le composé n°6 obtenu dans l'exemple 3 (2-HDBDMPDA) dissous dans un mélange de tertiobutyl-benzène et de décanol (90% en volume de t-butylbenzène et 10% en volume de décanol), la concentration en diamide de la phase organique étant de 0,5 mol.$l^{-1}$. Dans cet exemple, on réalise l'extraction en mettant en contact sous agitation la phase organique et la phase aqueuse contenant l'américium et l'europium avec un rapport en volume phase organique/phase aqueuse de 1.

Après 4 min de mise en contact sous agitation, on laisse décanter les phases et on mesure les concentrations en américium et en europium de la phase aqueuse et de la phase organique. On détermine ainsi les coefficients de distribution de l'américium et de l'europium $D_{Am}$ et $D_{Eu}$ qui correspondent au rapport de la concentration de l'élément (Am ou Eu) dans la phase organique sur la concentration de ce même élément dans la phase aqueuse. Les résultats obtenus sont donnés sur la figure 1 où les courbes 1 et 2 illustrent respectivement les variations de $D_{Am}$ et $D_{Eu}$ en fonction de la concentration en acide nitrique de la phase aqueuse (en mol.$l^{-1}$).

Sur cette figure, la courbe 3 en pointillés illustre les résultats obtenus en ce qui concerne le coefficient de distribution de l'américium lorsque l'on réalise l'extraction dans les mêmes conditions en utilisant le N,N'-diméthyl-N,N'-dioctyl-propanediamide de l'art antérieur.

Au vu de ces résultats, on constate que les coefficients de distribution de l'américium et de l'europium augmentent avec la concentration en acide nitrique de la phase aqueuse et qu'ils présentent un maximum pour une concentration en acide nitrique d'environ 5 mol.$l^{-1}$. Dans le cas du propanediamide de l'art antérieur (courbe 3), le coefficient de distribution de l'américium présente un maximum pour une concentration en acide nitrique de 2 mol.$l^{-1}$, mais ce maximum est inférieur à celui que l'on obtient avec le diamide de l'invention.

EXEMPLE 9

Cet exemple se rapporte également à l'extraction de l'américium et de l'europium présents respectivement à des concentrations de $10^{-4}$ mol.$l^{-1}$ pour Am (III) et de $10^{-2}$ mol.$l^{-1}$ pour Eu (III) dans des solutions aqueuses nitriques d'acidités différentes, au moyen du propanediamide constitué par le composé n°8 obtenu dans l'exemple 5 (2-(3-OP)DBDMPDA).

On utilise dans tous les cas une phase organique constituée par le diamide obtenu dans l'exemple 5, soit le 2-éthoxyéthyl-N,N'-diméthyl-N,N'-dibutyl-propanediamide (2-(3-OP)DBDMPDA) à une concentration de 0,5 mol.$l^{-1}$ dans une phase organique comportant 90% en volume de t-butylbenzène et 10% en volume de décanol. On réalise l'extraction de l'europium et de l'américium dans les mêmes conditions que celles de l'exemple 8 et après 4 min. de mise en contact, on mesure les concentrations en américium et en europium de la phase aqueuse et de la phase organique. On détermine alors les coefficients de distribution de l'américium et de l'europium.

Les résultats obtenus sont donnés sur la figure 2 où les courbes 4 et 5 illustrent respectivement les coefficients de distribution $D_{Am}$ et $D_{Eu}$ en fonction de la concentration en acide nitrique de la phase aqueuse (en mol.$l^{-1}$).

Sur cette figure, la courbe 6 en pointillés se rapporte aux résultats obtenus dans les mêmes conditions pour l'américium avec le N,N'-diméthyl-N,N'-dioctylpropanediamide de l'art antérieur (DODMPDA). Sur cette figure, on voit que le coefficient de distribution de l'américium et de l'europium augmente avec la concentration en acide nitrique de la phase aqueuse et que l'on obtient les meilleurs coefficients de distribution pour des concentrations en acide nitrique de 5 à 6 mol.$l^{-1}$.

Lorsque l'on utilise le propanediamide de l'art antérieur (courbe 6), on obtient le coefficient maximum d'extraction pour l'américium pour des concentrations en acide nitrique de 2 à 3 mol.l, mais ce maximum est nettement inférieur au maximum que l'on obtient avec le propanediamide de l'invention.

EXEMPLE 10

Cet exemple se rapporte également à la récupération de l'américium et de l'europium présents tous deux à l'état trivalent dans une phase aqueuse nitrique ayant une concentration en $HNO_3$ de 5 $mol.l^{-1}$, une concentration en Am (III) de $10^{-4}$ $mol.l^{-1}$ et une concentration en Eu (III) de $10^{-2}$ $mol.l^{-1}$.

On utilise pour l'extraction une phase organique constituée par le composé n°6 (2-HDBDMPDA) obtenu dans l'exemple 3 dans un mélange de tertiobutylbenzène et de décanol contenant 10% en volume de décanol. On réalise l'extraction dans les mêmes conditions que celles des exemples 8 et 9, en utilisant des phases organiques ayant des concentrations différentes en propanediamide. Les résultats obtenus sont donnés sur la figure 3 qui illustre les coefficients de distribution $D_{Am}$ et $D_{Eu}$ en fonction de la concentration en diamide de la phase organique (en $mol.l^{-1}$).

Sur cette figure, la droite 7 se rapporte à l'américium et la droite 8 se rapporte à l'europium.

Au vu de ces résultats, on constate que les coefficients de distribution $D_{Am}$ et $D_{Eu}$ augmentent rapidement avec la concentration en propanediamide de la phase organique.

EXEMPLE 11

Dans cet exemple, on extrait les ions Am (III) et Eu (III) à partir d'une phase aqueuse identique à celle de l'exemple 9 au moyen d'une phase organique constituée par du 2-(3-OP)DBDMPDA, soit le composé n°8 de l'exemple 5, dans un mélange de tertiobutylbenzène et de décanol contenant 10% en volume de décanol. On réalise l'extraction dans les mêmes conditions que celles de l'exemple 9 en utilisant différentes concentrations en propanediamide dans la phase organique. Les résultats obtenus sont donnés sur la figure 4 qui représente les coefficients de distribution $D_{Am}$ et $D_{Eu}$ en fonction de la concentration en propanediamide de la phase organique.

Sur cette figure, la droite 9 se rapporte à l'américium et la droite 10 à l'europium. On constate que les coefficients de distribution $D_{Am}$ et $D_{Eu}$ augmentent rapidement avec la concentration en propanediamide de la phase organique.

EXEMPLE 12

Cet exemple concerne la récupération d'américium (III) et d'europium (III) à partir d'une solution aqueuse analogue à celle des exemples 10 et 11.

Dans cet exemple, on utilise des phases organiques comprenant soit 0,5 $mol.l^{-1}$ de 2-HDBDMPDA (composé N°6), soit 0,5 $mol.l^{-1}$ de 2-(3-OP)DBDMPDA (composé N°8) dans un mélange de tertiobutylbenzène et de décanol avec des rapports différents en t-butylbenzène et en décanol. On réalise l'extraction dans les mêmes conditions que celles des exemples 10 et 11 et on détermine les coefficients de distribution de l'américium et de l'europium après extraction. Les résultats obtenus sont donnés sur la figure 5 qui représente les coefficients de distribution de l'américium et de l'europium en fonction du pourcentage en volume de décanol dans la phase organique.

Sur cette figure, la courbe 11 se rapporte à l'américium et au propanediamide de l'exemple 5 (2-(3-OP)DBDMPDA, la courbe 12 se rapporte à l'américium et au propanediamide de l'exemple 3 (2-HDBDMPDA), la courbe 13 se rapporte à l'europium et au propanediamide de l'exemple 5 (2-(3-OP)DBDMPDA) et la courbe 14 se rapporte à l'europium et au propanediamide de l'exemple 3 (2-HDBDMPDA).

Au vu de ces résultats, on constate que les coefficients de distribution diminuent lorsque la proportion en décanol de la phase organique augmente.

EXEMPLE 13

Dans cet exemple, on étudie l'influence du décanol sur la concentration limite en nitrate de praséodyme dans la phase organique à ne pas dépasser pour éviter la formation d'une troisième phase. La phase organique est constituée par le propanediamide de l'exemple 3 (2-HDBDMPDA) dilué soit dans du tertiobutylbenzène pur à une concentration de 0,75 $mol.l^{-1}$, soit dans un mélange de tertiobutylbenzène et de décanol renfermant 10% de décanol ou 20% de décanol à une concentration de 0,625 $mol.l^{-1}$.

On introduit le nitrate de praséodyme dans cette phase organique jusqu'à l'apparition d'une troisième phase et l'on relève la concentration limite qui correspond à l'apparition de cette troisième phase.

Les résultats obtenus sont donnés dans le tableau joint.

Ces résultats montrent que la présence de décanol est favorable, car elle retarde l'apparition de la troisième phase et permet de s'approcher de la saturation du solvant.

EXEMPLE 14

Cet exemple illustre la récupération de l'américium et de l'europium présents respectivement à des concentrations de $10^{-4}$ mol.l pour Am(III) et de $10^{-2}$ $mol.l^{-1}$ pour Eu(III) dans des solutions aqueuses nitriques d'acidités différentes, au moyen du propanediamide constitué par le composé n°5 (DIAM 802) du tableau 1.

On utilise dans tous les cas une phase organique constituée par le propanediamide DIAM 802 du tableau 1 à une concentration de 0,5 mol.l$^{-1}$ dans du t-butylbenzène. On réalise l'extraction dans les mêmes conditions que celles de l'exemple 8 et après 4 min de mise en contact on mesure les concentrations en américium et en europium de la phase aqueuse et de la phase organique. On détermine alors les coefficients de distribution de l'américium et de l'europium.

Les résultats obtenus sont donnés sur la figure 6 où les courbes 15 et 16 illustrent respectivement les variations de $D_{Am}$ et $D_{Eu}$ en fonction de la concentration en acide nitrique de la phase aqueuse (en mol.l$^{-1}$).

Sur cette figure, les courbes 17 et 18 en pointillés illustrent les résultats obtenus en ce qui concerne le coefficient de distribution de l'américium (courbe 17) et le coefficient de distribution de l'europium (courbe 18) lorsqu'on réalise l'extraction dans les mêmes conditions en utilisant le N,N'-diméthyl-N,N' dioctylpropanediamide de l'art antérieur.

Au vu de ces résultats, on constate que les coefficients de distribution de l'américium et de l'europium sont plus élevés avec le propanediamide de l'invention.

EXEMPLE 15

Cet exemple illustre la récupération de l'américium et de l'europium présents respectivement à des concentrations de 10$^{-4}$ mol.l$^{-1}$ pour Am(III) et de 10$^{-2}$ mol.l$^{-1}$ pour Eu(III) dans des solutions aqueuses nitriques d'acidités différentes au moyen du propanediamide constitué par le composé n°11 du tableau 2 de formule :

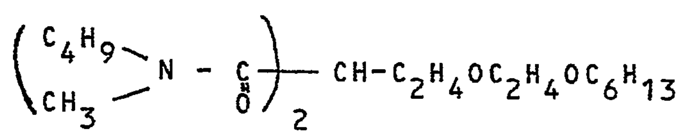

appelé ci-après 2-(3,6-OD) DBDMPDA.

On utilise dans tous les cas une phase organique constituée par le (2-(3,6,OD) DBMPDA à une concentration de 0,5 mol.l$^{-1}$ dans du t-butylbenzène. On réalise l'extraction dans les mêmes conditions que celles de l'exemple 8 et après 4 min. de mise en contact, on mesure les concentrations en américium et en europium de la phase aqueuse et de la phase organique. On détermine alors les coefficients de distribution de l'américium et de l'europium.

Les résultats obtenus sont donnés sur la figure 7 où les courbes 19 et 20 illustrent respectivement les variations de $D_{Am}$ et $D_{Eu}$ en fonction de la concentration en acide nitrique de la phase aqueuse (en mol.l$^{-1}$) et la courbe 21 en pointillé illustre les variations de $D_{Am}$ en fonction de la concentration en acide nitrique de la phase aqueuse lorsqu'on utilise dans les mêmes conditions le propanediamide de l'art antérieur (DODMPDA) au lieu du composé n°11.

On a aussi utilisé dans les mêmes conditions d'extraction les composés n° 14 et n° 15 du tableau 2 et l'on a obtenu des résultats analogues.

EXEMPLE 16

Cet exemple illustre l'utilisation du dipropanediamide constitué par le composé n°13 de l'exemple 7 pour l'extraction de l'américium (III) et de l'europium (III).

Dans cet exemple, on utilise une solution d'acide nitrique 4N contenant l'américium et l'europium et une phase organique constituée par le composé n°13 à la concentration de 0,5 mol.l$^{-1}$ dans du t-butylbenzène.

On réalise l'extraction dans les mêmes conditions que celles de l'exemple 8 et après 4 min. de mise en contact, on mesure la concentration en europium de la phase organique et de la phase aqueuse. On détermine ainsi le coefficient de distribution de l'europium $D_{Eu}$ qui est égal à 2,3.

On remarque ainsi que le composé n°13 donne également de bons résultats pour la récupération de l'europium.

EXEMPLE 17

Cet exemple illustre l'utilisation du composé n°11 du tableau 2 pour l'extraction de différents métaux tels que U(VI), Pu(IV), Zr(IV), Fe(III) et Nb(V), à partir de solutions nitriques contenant 10$^{-2}$ mol.l$^{-1}$ de ces métaux.

On réalise l'extraction en utilisant des phases aqueuses d'acidités différentes et une phase organique constituée par le composé n°11 du tableau 2 de l'exemple 6 à une concentration de 0,5 mol.l$^{-1}$ dans le t-butylbenzène.

On réalise l'extraction dans les mêmes conditions que celles de l'exemple 8 et, après 4 min. de mise en contact, on mesure les concentrations en métaux de la phase aqueuse et de la phase organique. On détermine alors les coefficients de distribution des différents métaux.

Les résultats obtenus sont donnés sur la figure 8 où les courbes 22, 23, 24, 25 et 26 illustrent respectivement les variations de $D_U$, $D_{Pu}$, $D_{Zr}$, $D_{Fe}$ et $D_{Nb}$ en fonction de la concentration en acide nitrique de la phaqe aqueuse (en $mol.l^{-1}$).

On constate ainsi que ce propanediamide convient à l'extraction de différents métaux et qu'en choisissant une acidité appropriée, il permet de séparer dans de bonnes conditions le zirconium du niobium.

Lorsqu'on part d'une solution aqueuse acide de $Sr^{2+}$ et qu'on réalise l'extraction en utilisant la même phase organique et les mêmes conditions que précédemment, on obtient un coefficient de partage $D_{Sr}$ pour le strontium qui est inférieur à $10^{-3}$.

TABLEAU

| Extractant | Diluant | Apparition de la 3ème phase | % de saturation du solvant |
|---|---|---|---|
| 0,75 M 2-hexyl,N,N'-dibutyldiméthylpropane diamide (2-HDBDMPDA) | t-butylbenzène | 0,075 M $Pr(NO_3)_3$ | 20% |
| 0,625 M 2-HDBDMPDA | t-butylbenzène + 10% décanol | 0,17 M $Pr(NO_3)_3$ | 50% |
| 0,625 M 2-HDBDMPDA | t-butylbenzène + 20% décanol | 0,218 M $Pr(NO_3)_3$ | 70% |

**Revendications**

1. Composition d'extraction de métaux, caractérisée en ce qu'elle comprend comme agent actif dans un diluant organique inerte, un propanediamide de formule:

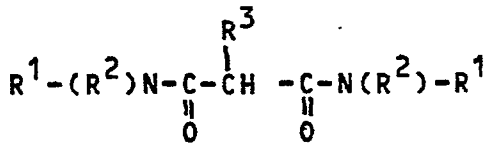 (I)

dans laquelle $R^1$ et $R^2$ qui peuvent être identiques ou différents, représentent un radical alkyle linéaire ou ramifié ayant de 1 à 15 atomes de carbone ou un radical de formule:

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0; et $R^3$ représente un atome d'hydrogène, un radical alkyle de 1 à 15 atomes de carbone, un radical de formule:

$$-(CH_2)_n-Z-(CH_2)_m-O-R^4$$

dans laquelle n, m, Z et $R^4$ ont la signification donnée ci-dessus, ou un radical de formule:

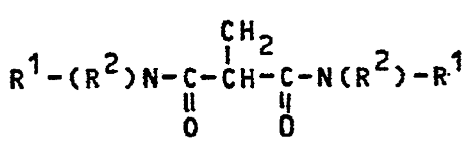

dans laquelle $R^1$ et $R^2$ ont la signification donnée ci-dessus, à condition que $R^3$ ne représente pas un atome d'hydrogène lorsque $R^1$ et $R^2$ représentent tous deux un radical alkyle.

2. Composition selon la revendication 1, caractérisée en ce que $R^1$ est le radical méthyle.

3. Composition selon l'une quelconque des revendications 1 et 2, caractérisée en ce que l'un au moins des radicaux $R^2$ et $R^3$ répond à la formule:

$$-(CH_2)_n-Z-(CH_2)_m-O-R^4$$

dans laquelle n, m, Z et $R^4$ ont la signification donnée dans la revendication 1.

4. Composition selon la revendication 2, caractérisée en ce que $R^2$ est un radical alkyle et $R^3$ est le radical de formule:

$$-(CH_2)_n-Z-(CH_2)_m-O-R^4$$

dans laquelle n, m, Z et $R^4$ ont la signification donnée dans la revendication 1.

5. Composition selon l'une quelconque des revendications 3 et 4, caractérisée en ce que n est égal à 0, Z est une simple liaison, m est égal à 1, 2 ou 3 et $R^4$ est un radical alkyle de 2 à 6 atomes de carbone.

6. Composition selon l'une quelconque des revendications 3 et 4, caractérisée en ce que n est égal à 2, Z représente un atome d'oxygène, m est égal à 2 et $R^4$ est un radical alkyle de 2 à 6 atomes de carbone.

7. Composition selon la revendication 1, caractérisée en ce que $R^1$ est le radical méthyle, $R^2$ est le radical butyle et $R^3$ est le radical hexyle.

8. Composition selon la revendication 1, caractérisée en ce que $R^1$ est le radical méthyle, $R^2$ est le radical butyle et $R^3$ est le radical $-C_2H_4-O-C_2H_5$.

9. Propanediamide, caractérisé en ce qu'il répond à la formule:

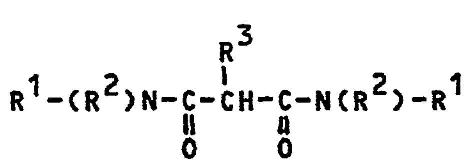 (I)

dans laquelle $R^1$ et $R^2$ qui peuvent être identiques ou différents, représentent un radical alkyle linéaire ou ramifié ayant de 1 à 15 atomes de carbone ou un radical de formule:

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0; et $R^3$ représente un atome d'hydrogène, un radical alkyle de 1 à 15 atomes de carbone, ou un radical de formule:

$$-(CH_2)_n-Z-(CH_2)_m-O-R^4$$

dans laquelle n, m, Z et $R^4$ ont la signification donnée ci-dessus, à condition que l'un au moins des radicaux $R^1$, $R^2$ et $R^3$ réponde à la formule:

$$-(CH_2)_n-Z-(CH_2)_mOR^4$$

dans laquelle n, m, Z et $R^4$ ont la signification donnée ci-dessus.

10. Propanediamide selon la revendication 9, caractérisé en ce que $R^1$ est le radical méthyle, $R^2$ est le radical octoxyéthyle et $R^3$ est un atome d'hydrogène.

11. Propanediamide selon la revendication 9, caractérisé en ce que $R^1$ est le radical méthyle, $R^2$ est le radical butyle et $R^3$ est un radical choisi parmi les radicaux éthoxyéthyle, butoxyéthyle, hexoxyéthyle et hexoxyéthoxyéthyle.

12. Propanediamide selon la revendication 9, caractérisé en ce que $R^1$ est le radical méthyle, $R^2$ est le radical octyle et $R^3$ est le radical hexoxyéthyle.

13. Procédé de préparation d'une composition d'extraction selon la revendication 1, caractérisé en ce qu'il comprend la préparation d'un propanediamide pentasubstitué répondant à la formule:

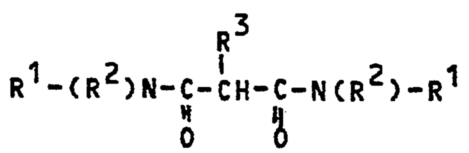 (I)

dans laquelle $R^1$ et $R^2$ qui peuvent être identiques ou différents, représentent un radical alkyle linéaire ou ramifié ayant de 1 à 15 atomes de carbone ou un radical de formule:

$$-(CH_2)_n-Z-(CH_2)_m-O-R^4$$

dans laquelle $R^4$ est un radical alkyle de 1 à 6 atomes de carbone, n est égal à 0 ou est un nombre entier allant de 1 à 6, Z est une simple liaison ou un atome d'oxygène et m est un nombre entier allant de 1 à 6, à condition que Z soit une simple liaison lorsque n est égal à 0; et $R^3$ représente un radical alkyle de 1 à 15 atomes de carbone ou un radical de formule:

$$-(CH_2)_n-Z-(CH_2)_m-O-R^4$$

dans laquelle n, m, Z et $R^4$ ont la signification donnée ci-dessus, par réaction d'un propanediamide tétrasubstitué de formule:

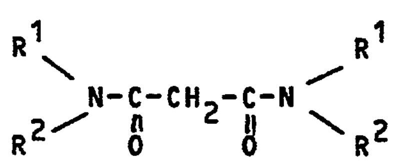 (III)

dans laquelle $R^1$ et $R^2$ ont la signification donnée ci-dessus avec un halogénure de formule $R^3X$ dans laquelle X représente un atome d'halogène, en présence d'agents métallants tels que le n-butyl lithium ou le t-butyl lithium.

14. Procédé de récupération des actinides et/ou des lanthanides présents à l'état trivalent dans une solution aqueuse acide, caractérisé en ce qu'il consiste à mettre en contact ladite solution aqueuse avec une composition d'extraction selon l'une quelconque des revendications 1 à 8.

15. Procédé selon la revendication 14, caractérisé en ce que la concentration en diamide de la phase organique est de 0,1 à 1,5 $mol.l^{-1}$.

16. Procédé selon l'une quelconque des revendications 14 et 15, caractérisé en ce que le diluant est constitué par un mélange de décanol et d'un composé choisi dans le groupe comprenant le benzène, le xylène, le mésitylène, le tertiobutylbenzène et le dodécane.

17. Procédé selon la revendication 16, caractérisé en ce que la composition comprend au plus 20% en volume de décanol.

**Patentansprüche**

1. Metallextraktionsmittel, dadurch gekennzeichnet, daß es als aktives Agens in einem inerten organischen Verdünnungsmittel ein Propandiamid der Formel (I) enthält

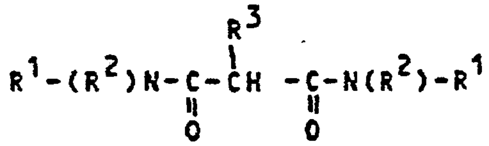 (I)

worin bedeuten:

$R^1$ und $R^2$, die gleich oder verschieden sein können, einen linearen oder verzweigten Alkylrest mit 1 bis 15 Kohlenstoffatomen oder einen Rest der Formel

$$-(CH_2)_n-Z-(CH_2)_m-O-R^4$$

worin $R^4$ für einen Alkylrest mit 1 bis 6 Kohlenstoffatomen steht, n die Zahl 0 oder eine ganze Zahl von 1 bis 6 bedeutet, Z eine einfache Bindung oder ein Sauerstoffatom darstellt und m eine ganze Zahl von 1 bis 6 bedeutet, mit der Maßgabe, daß Z eine einfache Bindung darstellt, wenn n = 0, und

$R^3$ ein Wasserstoffatom, einen Alkylrest mit 1 bis 15 Kohlenstoffatomen, einen Rest der Formel

$$-(CH_2)_n-Z-(CH_2)_m-O-R^4$$

worin n, m, Z und $R^4$ die oben angegebenen Bedeutungen haben, oder einen Rest der Formel

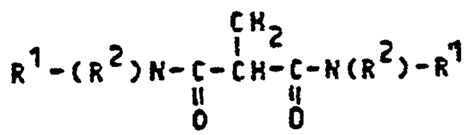

worin $R^1$ und $R^2$ die oben angegebenen Bedeutungen haben, mit der Maßgabe, daß $R^3$ kein Wasserstoffatom darstellt, wenn $R^1$ und $R^2$ beide einen Alkylrest bedeuten.

2. Mittel nach Anspruch 1, dadurch gekennzeichnet, daß $R^1$ den Methylrest bedeutet.

3. Mittel nach einem der Ansprüche 1 und 2, dadurch gekennzeichnet, daß mindestens einer der Reste $R^2$ und $R^3$ die Formel hat:

$$-(CH_2)_n-Z-(CH_2)_m-O-R^4$$

worin n, m, Z und $R^4$ die in Anspruch 1 angegebenen Bedeutungen haben.

4. Mittel nach Anspruch 2, dadurch gekennzeichnet, daß $R^2$ einen Alkylrest und $R^3$ den Rest der Formel darstellen

$$-(CH_2)_n-Z-(CH_2)_m-O-R^4$$

worin n, m, Z und $R^4$ die in Anspruch 1 angegebenen Bedeutungen haben.

5. Mittel nach einem der Ansprüche 3 und 4, dadurch gekennzeichnet, daß n = 0, Z eine einfache Bindung darstellt, m = 1, 2 oder 3 und $R^4$ einen Alkylrest mit 2 bis 6 Kohlenstoffatomen bedeutet.

6. Mittel nach einem der Ansprüche 3 und 4, dadurch gekennzeichnet, daß n = 2, Z ein Sauerstoffatom bedeutet, m = 2 und $R^4$ einen Alkylrest mit 2 bis 6 Kohlenstoffatomen bedeutet.

7. Mittel nach Anspruch 1, dadurch gekennzeichnet, daß $R^1$ für den Methylrest, $R^2$ für den Butylrest und $R^3$ für den Hexylrest stehen.

8. Mittel nach Anspruch 1, dadurch gekennzeichnet, daß $R^1$ den Methylrest, $R^2$ den Butylrest und $R^3$ den Rest $-C_2H_4-O-C_2H_5$ bedeuten.

9. Propandiamid, dadurch gekennzeichnet, daß es die Formel hat

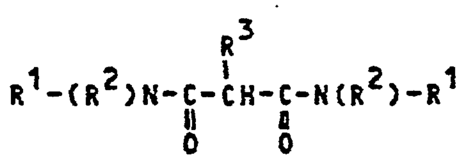 (I)

worin bedeuten:

$R^1$ und $R^2$, die gleich oder verschieden sein können, einen linearen oder verzweigten Alkylrest mit 1 bis 15 Kohlenstoffatomen oder einen Rest der Formel

$$-(CH_2)_n-Z-(CH_2)_m-O-R^4$$

worin $R^4$ einen Alkylrest mit 1 bis 6 Kohlenstoffatomen darstellt, n die Zahl 0 oder eine ganze Zahl von 1 bis 6 bedeutet, Z eine einfache Bindung oder ein Sauerstoffatom darstellt und m eine ganze Zahl von 1 bis 6 bedeutet, mit der Maßgabe, daß Z eine einfache Bindung darstellt, wenn n = 0; und

$R^3$ ein Wasserstoffatom, einen Alkylrest mit 1 bis 15 Kohlenstoffatomen oder einen Rest der Formel

$$-(CH_2)_n-Z-(CH_2)_m-O-R^4$$

worin n, m, Z und $R^4$ die oben angegebenen Bedeutungen haben, mit der Maßgabe, daß mindestens einer der Reste $R^1$, $R^2$ und $R^3$ die Formel hat

$$-(CH_2)_n-Z-(CH_2)_mOR^4$$

worin n, m, Z und $R^4$ die oben angegebenen Bedeutungen haben.

10. Propandiamid nach Anspruch 9, dadurch gekennzeichnet, daß $R^1$ den Methylrest, $R^2$ den Octoxyethylrest und $R^3$ ein Wasserstoffatom bedeuten.

11. Propandiamid nach Anspruch 9, dadurch gekennzeichnet, daß $R^1$ den Methylrest, $R^2$ den Butylrest und $R^3$ einen Rest, ausgewählt aus den Ethoxyethyl-, Butoxyethyl-, Hexoxyethyl- und Hexoxyethoxyethylresten, bedeuten.

12. Propandiamid nach Anspruch 9, dadurch gekennzeichnet, daß $R^1$ den Methylrest, $R^2$ den Octylrest und $R^3$ den Hexoxyethylrest bedeuten.

13. Verfahren zur Herstellung eines Extraktionsmittels nach Anspruch 1, dadurch gekennzeichnet, daß es umfaßt die Herstellung eines pentasubstituierten Propandiamids der Formel

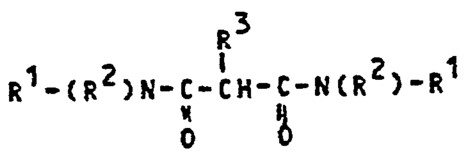

(I)

worin $R^1$ und $R^2$, die gleich oder verschieden sein können, einen linearen oder verzweigten Alkylrest mit 1 bis 15 Kohlenstoffatomen oder einen Rest der Formel

$$-(CH_2)_n-Z-(CH_2)_m-O-R^4$$

worin $R^4$ einen Alkylrest mit 1 bis 6 Kohlenstoffatomen, n die Zahl 0 oder eine ganze Zahl von 1 bis 6, Z eine einfache Bindung oder ein Sauerstoffatom und m eine ganze Zahl von 1 bis 6 bedeuten, mit der Maßgabe, daß Z eine einfache Bindung ist, wenn n = 0; und $R^3$ einen Alkylrest mit 1 bis 15 Kohlenstoffatomen oder einen Rest der Formel

$$-(CH_2)_n-Z-(CH_2)_m-O-R^4$$

worin n, m, Z und $R^4$ die oben angegebenen Bedeutungen haben, darstellen, durch Umsetzung eines tetrasubstituierten Propandiamids der Formel

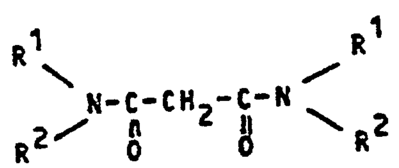

(III)

worin $R^1$ und $R^2$ die oben angegebenen Bedeutungen haben, mit einem Halogenid der Formel $R^3X$, worin X ein Halogenatom darstellt, in Gegenwart eines Metallisierungsmittels wie n-Butyllithium oder t-Butyllithium.

14. Verfahren zur Rückgewinnung der in einer wäßrigen Säurelösung in dreiwertigem Zustand vorliegenden Actiniden und/oder Lanthaniden, dadurch gekennzeichnet, daß man die genannte wäßrige Lösung mit einem Extraktionsmittel nach einem der Ansprüche 1 bis 8 in Kontakt bringt.

15. Verfahren nach Anspruch 14, dadurch gekennzeichnet, daß die Diamid-Konzentration der organischen Phase 0,1 bis 1,5 Mol/l beträgt.

16. Verfahren nach einem der Ansprüche 14 und 15, dadurch gekennzeichnet, daß das Verdünnungsmittel besteht aus einem Gemisch von Decanol und einer Verbindung, ausgewählt aus der Gruppe Benzol, Xylol, Mesitylen, tert-Butylbenzol und Dodecan.

17. Verfahren nach Anspruch 16, dadurch gekennzeichnet, daß das Mittel höchstens 20 Vol.-% Decanol enthält.

## Claims

1. Extracting composition for metals, characterized in that it comprises as the active agent in an inert organic diluent a propane diamide of formula:

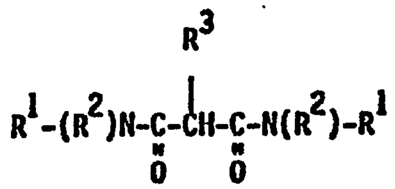

(I)

in which $R^1$ and $R^2$, which can be the same or different, represent a straight or branched alkyl radical with 1 to 15 carbon atoms or a radical of formula:

$$-(CH_2)_n-Z-(CH_2)_m-O-R^4$$

in which $R^4$ is an alkyl radical with 1 to 6 carbon atoms, n is equal to 0 or is an integer ranging between 1 and 6, Z is a single bond or an oxygen atom and m is an integer ranging from 1 to 6, provided that Z is a single bond when n is equal to 0 and $R^3$ represents a hydrogen atom, an alkyl radical with 1 to 15 carbon atoms, a radical of formula:

$$-(CH_2)_n-Z-(CH_2)_m-O-R^4$$

in which n, m, Z and $R^4$ have the meanings given hereinbefore, or a radical of formula:

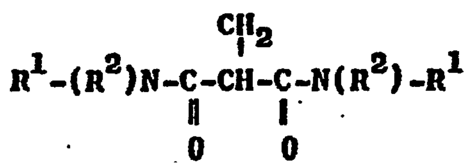

in which $R^1$ and $R^2$ have the meanings given hereinbefore, provided that $R^3$ does not represent a hydrogen atom when $R^1$ and $R^2$ both represent an alkyl radical.

2. Composition according to claim 1, characterized in that $R^1$ is the methyl radical.

3. Composition according to either of the claims 1 and 2, characterized in that at least one of the radicals $R^2$ and $R^3$ is in accordance with the formula:

$$-(CH_2)_n-Z-(CH_2)_m-O-R^4$$

in which n, m, Z and $R^4$ have the meanings given in claim 1.

4. Composition according to claim 2, characterized in that $R^2$ is an alkyl radical and $R^3$ the radical of formula:

$$-(CH_2)_n-Z-(CH_2)_m-O-R^4$$

in which n, m, Z and $R^4$ have the meanings given in claim 1.

5. Composition according to either of the claims 3 and 4, characterized in that n is equal to 0, Z is a single bond, m is equal to 1, 2 or 3 and $R^4$ is an alkyl radical with 2 to 6 carbon atoms.

6. Composition according to either of the claims 3 and 4, characterized in that n is equal to 2, Z represents an oxygen atom, m is equal to 2 and $R^4$ is an alkyl radical with 2 to 6 carbon atoms.

7. Composition according to claim 1, characterized in that $R^1$ is the methyl radical, $R^2$ the butyl radical and $R^3$ the hexyl radical.

8. Composition according to claim 1, characterized in that $R^1$ is the methyl radical, $R^2$ is the butyl radical and $R^3$ is the radical $-C_2H_4-O-C_2H_5$.

9. Propane diamide, characterized in that it is in accordance with formula:

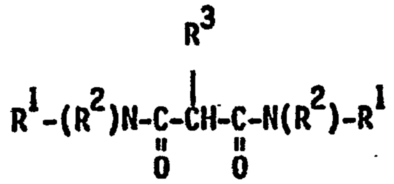

(I)

in which $R^1$ and $R^2$, which can be the same or different, represent a straight or branched alkyl radical having 1 to 15 carbon atoms or a radical of formula:

$$-(CH_2)_n-Z-(CH_2)_m-O-R^4$$

in which $R^4$ is an alkyl radical with 1 to 6 carbon atoms, n is equal to 0 or is an integer ranging between 1 and 6, Z is a single bond or an oxygen atom and m is an integer ranging between 1 and 6, provided that Z is a single bond when n is equal to 0 and $R^3$ represents a hydrogen atom, an alkyl radical with 1 to 15 carbon atoms or a radical of formula:

$$-(CH_2)_n-Z-(CH_2)_m-O-R^4$$

in which n, m, Z and $R^4$ have the meanings given hereinbefore, provided that at least one of the radicals $R^1$, $R^2$ and $R^3$ is in accordance with the formula:

$$-(CH_2)_n-Z-(CH_2)_mOR^4$$

in which n, m, Z and $R^4$ have the meanings given hereinbefore.

10. Propane diamide according to claim 9, characterized in that $R^1$ is the methyl radical, $R^2$ is the octoxyethyl radical and $R^3$ is a hydrogen atom.

11. Propane diamide according to claim 9, characterized in that $R^1$ is the methyl radical, $R^2$ is the butyl radical and $R^3$ is a radical chosen from among the ethoxyethyl, butoxyethyl, hexoxyethyl and hexoxyethoxyethyl radicals.

12. Propane diamide according to claim 10, characterized in that $R^1$ is the methyl radical, $R^2$ is the octyl radical and $R^3$ is the hexoxyethyl radical.

13. Process for the preparation of an extracting composition according to claim 1, characterized in that it comprises the preparation of a pentasubstituted propane diamide according to formula:

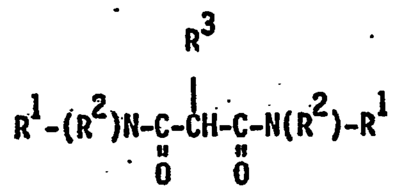

(I)

in which $R^1$ and $R^2$, which can be the same or different, represent a straight or branched alkyl radical with 1 to 15 carbon atoms or a radical of formula:

$$-(CH_2)_n-Z-(CH_2)_m-O-R^4$$

in which $R^4$ is an alkyl radical with 1 to 6 carbon atoms, n is equal to 0 or is an integer ranging between 1 and 6, Z is a single bond or an oxygen atom and m is an integer ranging between 1 and 6, provided that Z is a single bond when n is equal to 0 and $R^3$ represents an alkyl radical with 1 to 15 carbon atoms or a radical of formula:

$$-(CH_2)_n-Z-(CH_2)_m-O-R^4$$

in which n, m, Z and $R^4$ have the meanings given hereinbefore, by reacting a tetrasubstituted propane diamide of formula:

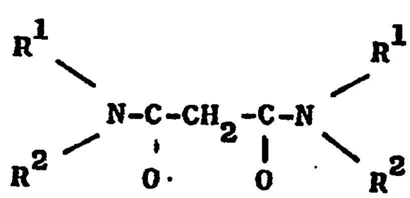

(III)

in which $R^1$ and $R^2$ have the meanings given hereinbefore with a halide of formula $R^3X$, in which X represents a halogen atom, in the presence of metallation agents, such as n-butyl lithium or t-butyl lithium.

14. Process for the recovery of actinides and/or lanthanides present in the trivalent state in an acid aqueous solution, characterized in that it consists of contacting said aqueous solution with an extracting composition according to any one of the claims 1 to 8.

15. Process according to claim 14, characterized in that the diamide concentration of the organic phase is 0.1 to 1.5 $mol \cdot l^{-1}$.

16. Process according to either of the claims 14 and 15, characterized in that the diluent is constituted by a mixture of decanol and a compound chosen from the group including benzene, xylene, mesitylene, t-butyl benzene and dodecane.

17. Process according to claim 16, characterized in that the composition comprises at the most 20% by volume of decanol.

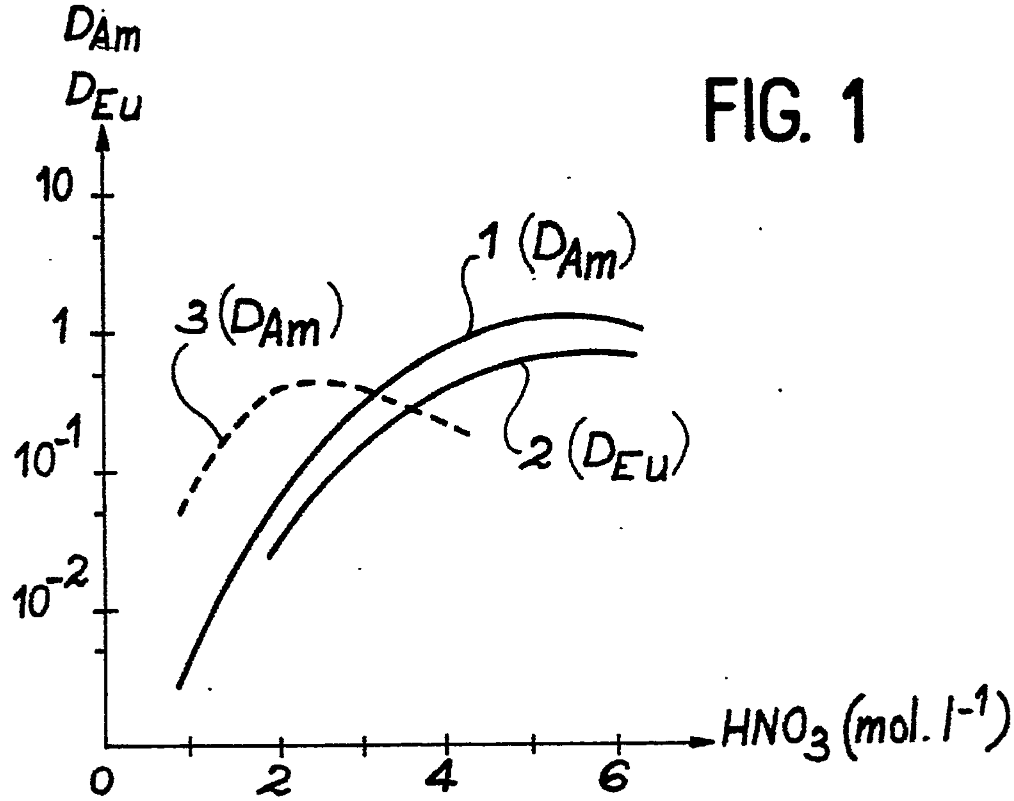
DAm
DEu
10
1
10-1
10-2
1 (DAm)
3 (DAm)
2 (DEu)
HNO3 (mol. l-1)
0
2
4
6

FIG. 1

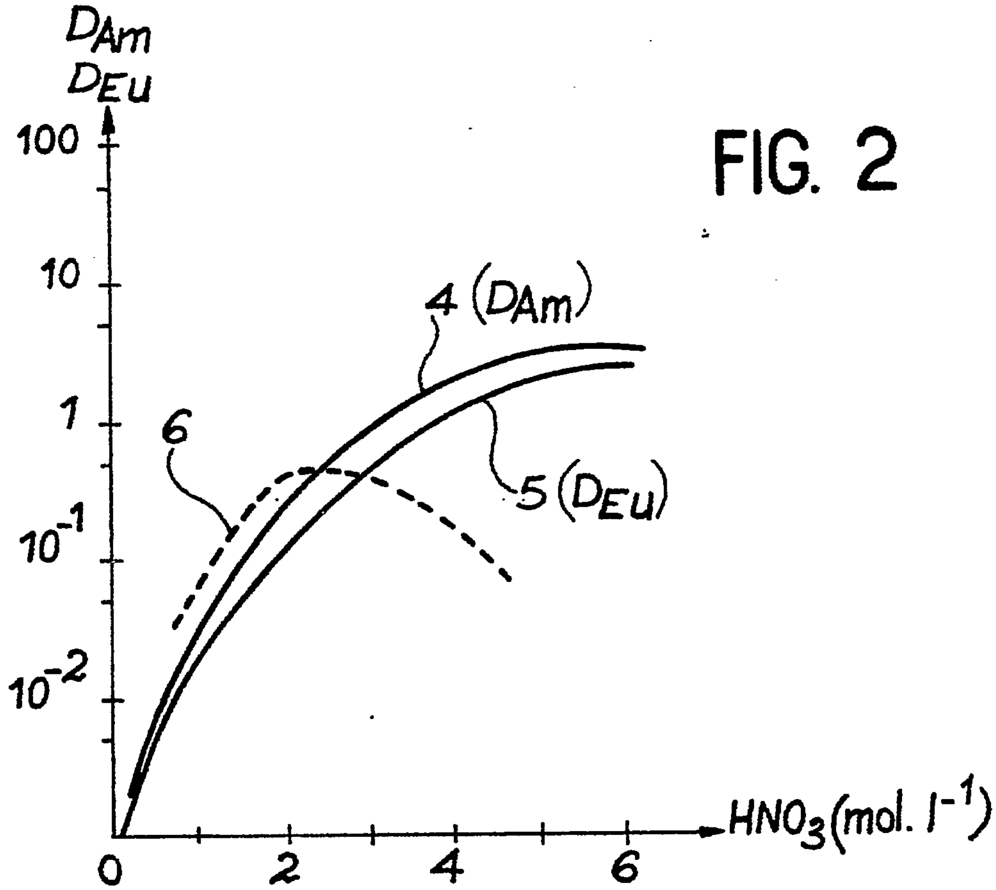
DAm
DEu
100
10
1
10-1
10-2
4 (DAm)
6
5 (DEu)
HNO3 (mol. l-1)
0
2
4
6

FIG. 2

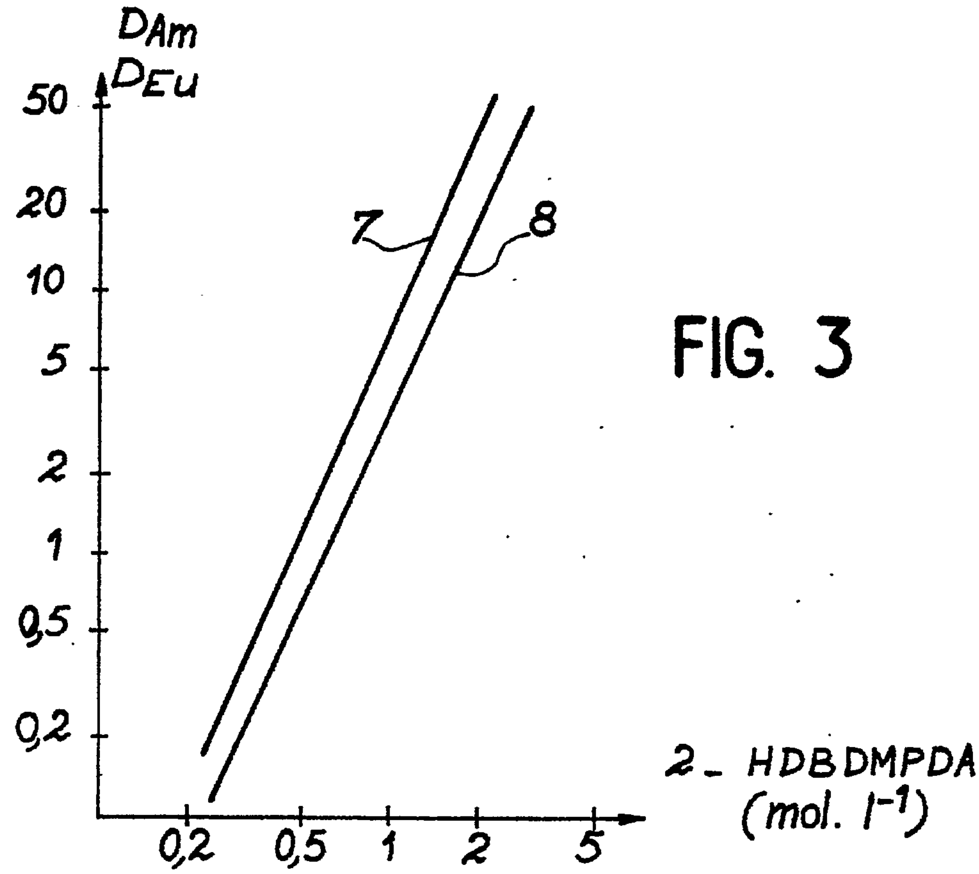
DAm
DEu
50
20
10
5
2
1
0,5
0,2
7
8
2-HDBDMPDA
(mol. l-1)
0,2
0,5
1
2
5

FIG. 3

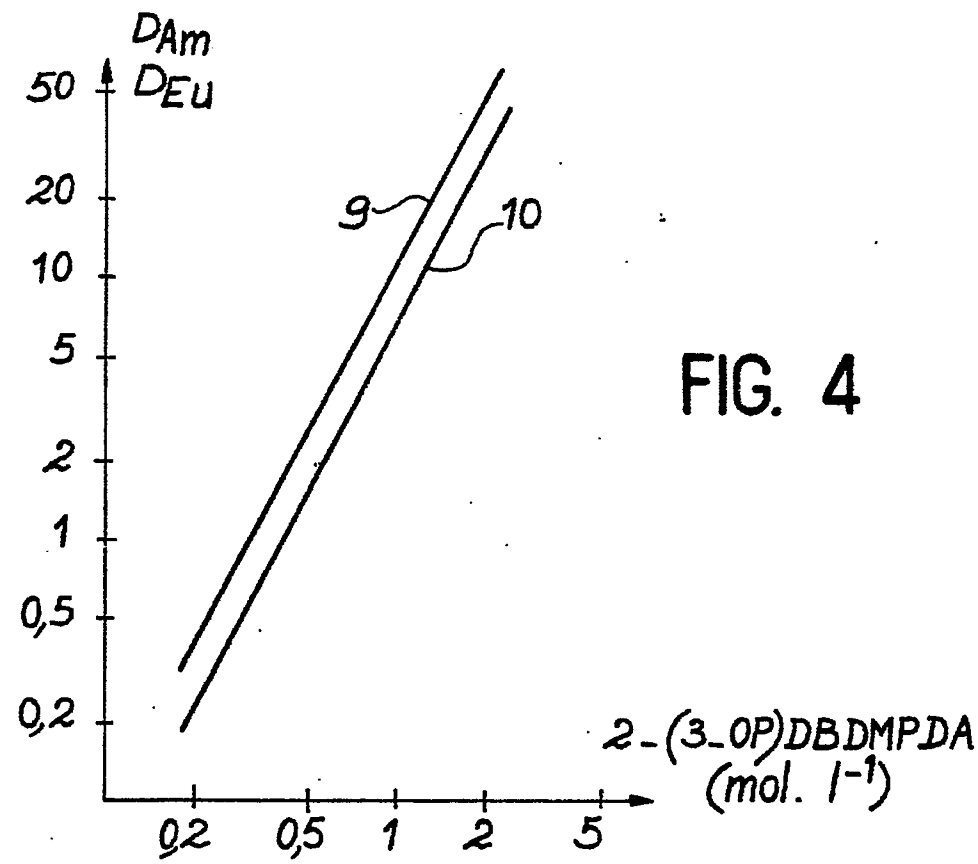
DAm
DEu
50
20
10
5
2
1
0,5
0,2
9
10
2-(3-OP)DBDMPDA
(mol. l-1)
0,2
0,5
1
2
5

FIG. 4

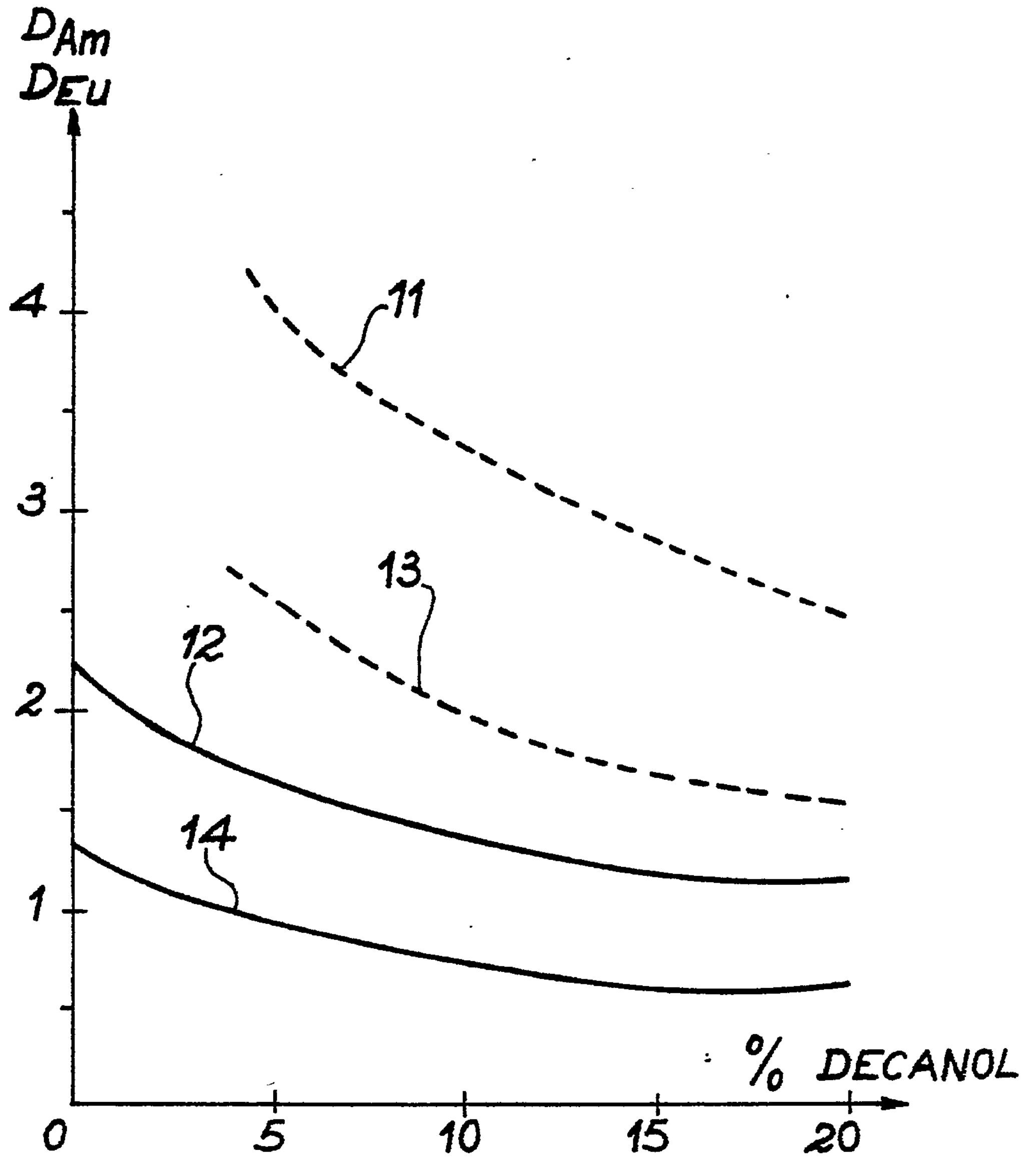


FIG. 5

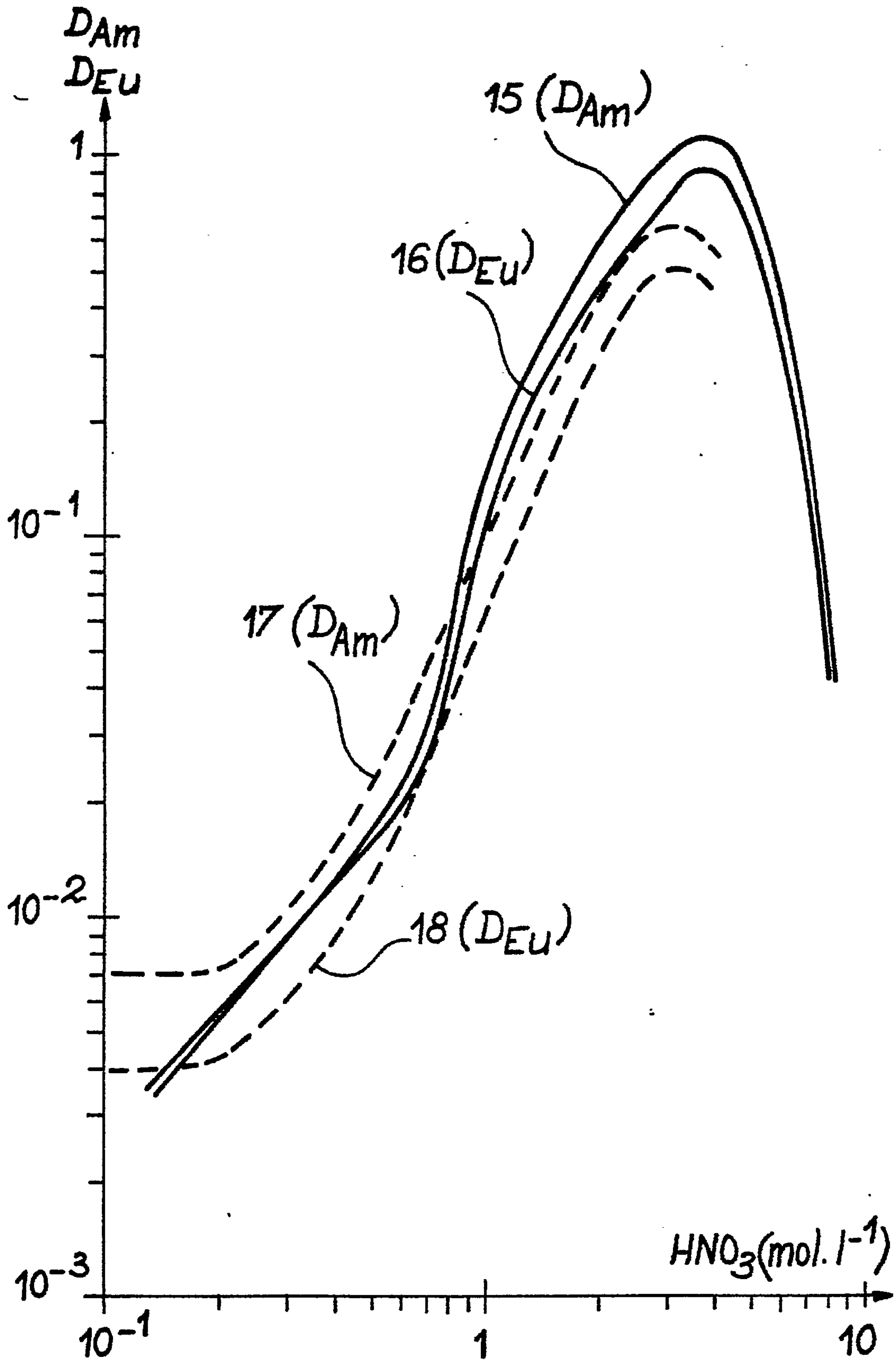
DAm
DEu
1
10-1
10-2
10-3
15 (DAm)
16 (DEu)
17 (DAm)
18 (DEu)
HNO3 (mol.l-1)
10-1
1
10

FIG. 6

FIG. 7

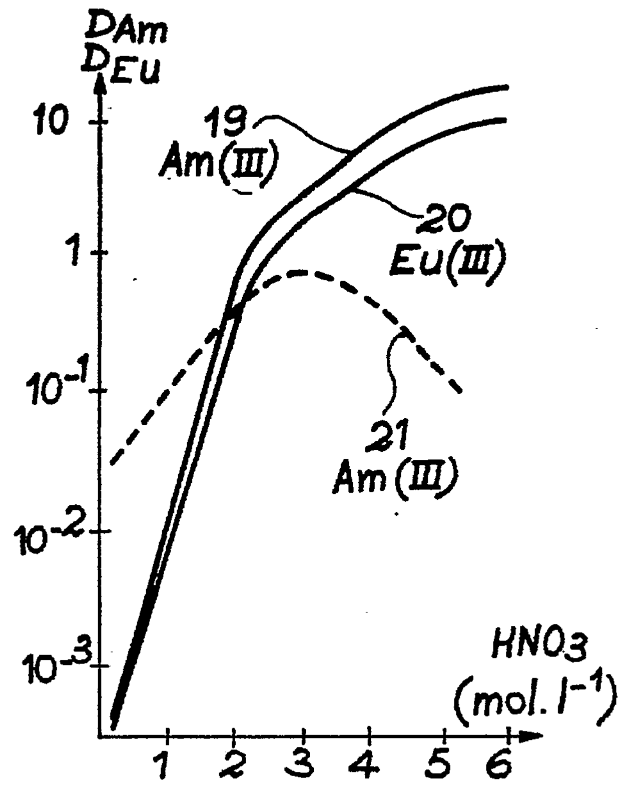
DAm
DEu
10
1
10-1
10-2
10-3
19
Am(III)
20
Eu(III)
21
Am(III)
HNO3
(mol. l-1)
1 2 3 4 5 6

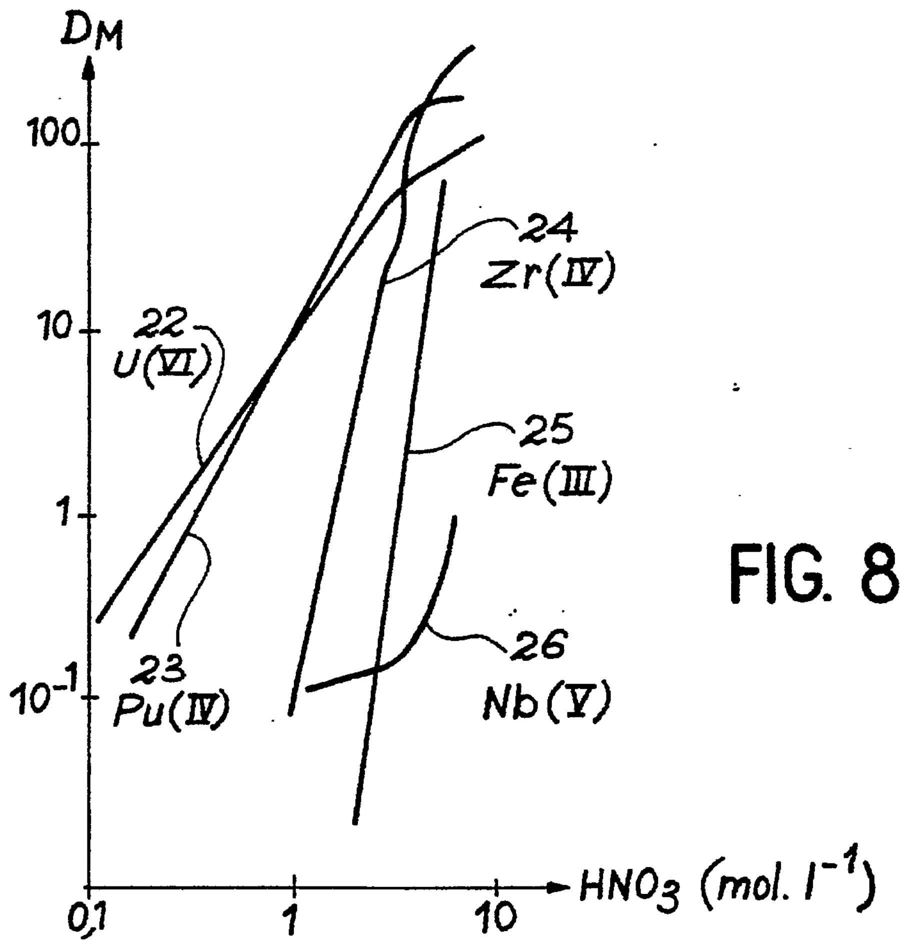
DM
100
10
1
10-1
22
U(VI)
23
Pu(IV)
24
Zr(IV)
25
Fe(III)
26
Nb(V)
0,1 1 10
HNO3 (mol. l-1)

FIG. 8